# EUROPEAN PATENT SPECIFICATION

(11) **EP 0 762 329 B1**
(45) Date of publication and mention of the grant of the patent: **27.11.2002**
(21) Application number: 96114175.1
(22) Date of filing: 04.09.1996
(51) Int. Cl.: G06T 11/00

(54) **Graphic processing apparatus and method**
Vorrichtung und Verfahren zur Grafikverarbeitung
Appareil et procédé de traitement graphique

(30) Priority: 08.09.1995 JP 25575795
(43) Date of publication of application: 12.03.1997
(73) Proprietor: FUJI XEROX CO., LTD., Minato-ku, Tokyo (JP)
(72) Inventor: Nomura, Takahiko, Ashigarakami-gun, Kanagawa (JP); Hayashi, Naoki, Ashigarakami-gun, Kanagawa (JP)
(74) Representative: Hoffmann, Eckart, Dipl.-Ing.

(56) References cited:
- EP-A- 0 356 117
- GB-A- 2 220 331
- APL QUOTE QUAD, vol. 23, no. 3, March 1993, USA, pages 9-14, XP000677190 LEWIS: "FULL-SCREEN, SCROLLABLE APL2 SPREADSHEET INPUT/OUTPUT EDITOR"
- PATENT ABSTRACTS OF JAPAN vol. 012, no. 197 (M-706), 8 June 1988 & JP 63 004950 A (CANON INC), 9 January 1988,
- PATENT ABSTRACTS OF JAPAN vol. 010, no. 266 (P-496), 11 September 1986 & JP 61 090261 A (HITACHI LTD), 8 May 1986,

## Description

The invention relates to a graphic processing apparatus. In particular, the invention relates to a graphic processing apparatus that is capable of painting colors on graphics or hatching graphics by expressing differences in color and/or hatching density and varying a color tone in accordance with commands entered by a user.

In recent years, through DTP (Desk Top Publishing) technologies and color printers, colored texts can be easily created, even in a general office. In addition, a full-color digital copy machine with functions to process texts and graphics has been developed and implemented. An example of such a full-color digital copy machine is disclosed in Japanese Patent No. 2-223275 (1990). By utilizing these technologies, a user having knowledge and experience in the coloring field can compose texts by making a variety of studies of text composition over a long time to create high-quality text.

In many cases, however, a user does not know which part of text should be colored to make the text easy to read. Even if parts of the text are colored on a trial-and-error basis, the resulting text can be poor-looking and difficult to read. Thus, it does not have a high quality.

However, Japanese Patent Nos. 3-109874 (JP 874) (1991) and 6-168310 (JP 310) (1994) allow an improved coloring and appearance of text by a general user who lacks knowledge and design sense with respect to color arrangement.

The technology disclosed in JP 874 provides complementary colors for characters included in a displayed color picture. However, it does not adequately process and output text with a high-quality design to reflect the intention of the user. JP 310 converts input text into a layout and color arrangement of a finished image, which matches the intent of a user. However, a user can only specify the purpose and impression of the coloring. A user can not control details of the coloring and the highlighting of regions of a picture in order to reflect their intention.

In Japanese Patent No. 7-220101 (1995) entitled "Text Processing Apparatus", a color-arrangement function can be executed by merely entering simple design commands such as "Coloring," "Background Coloring" and "Emphasis-Relation. Even with this technology, a user can not "step" into the area, degree of importance and other attributes of a region to be colored to color on the region. As a result, the processing ends with only coloring from a theoretical configuration/structure of a graph.

The document EP-A-0 356 117 discloses an apparatus which has an edit pad for selecting portions an original document and means for reproducing the selected portions in a highlight color with the remainder of the document being reproduced in a different color.

Prior devices do not arrange colors in accordance with the area and degree of importance of a region to be colored, which area and degree of importance are the basic attributes of coloring, is not considered no matter which technology is utilized. In many cases, a portion of a manuscript that should not be highlighted appears highlighted adversely as an emphasized portion. These are some of the problems that are to be solved.

The above also holds true for hatching of text. Hatching, conducted without highlighting a region based on hatching design/pattern being considered, can cause a problem in that that a region, which should not be highlighted, is adversely highlighted due to an effect of the hatching density.

The invention as claimed in claim 1 and 13, respectively solves the problems described above. Preferred embodiments of the invention are subect-matter of the dependent claims.

In one embodiment of the invention a graphic processing apparatus is provided, which is capable of controlling a highlighting state of a region by providing differences in color and hatching densities in accordance with an area and degree of importance of the region. This allows high-quality coloring and hatching to be easily conducted. In another embodiment of the invention a graphic processing apparatus is provided, which allows high-quality coloring and hatching to be easily conducted even where regions to be provided with the same colors and same design/pattern of hatching are organized into categories.

A manuscript to undergo a graphic coloring process can be read in by a scanner, an editor or the like, and a manuscript picture thereof may be temporarily stored in a manuscript-picture holding means (memory). A region extracting means (region selector) can extract regions to be colored from the manuscript picture temporarily stored in the manuscript-picture holding means. For example, regions of a manuscript picture that may be colored or hatched are extracted by the region extracting means. The regions of a manuscript picture to undergo coloring or hatching may be extracted, in accordance with information in the manuscript or information entered by a user. Commands entered by a user may include not only a command for specifying a region to undergo coloring or hatching, but also commands for requesting that regions to undergo the same coloring or the same hatching be categorized into a group of regions.

Subsequently, a region-color determining means (appearance alterer) can determine region colors, which are differentiated from each other by differences in color attribute among the regions in accordance with the areas of the individual regions. An output-picture generating means (outputter) then may generate an output picture for the manuscript picture temporarily stored in the manuscript-picture holding means by providing color attributes determined by the region-color determining means to the regions in the output picture which regions have been extracted by the region extracting means.

Therefore, areas of regions that may be computed areas, the region-color determining means may identify differences in density, chroma and phase, among colors to be given to the regions, and may differentiate the region colors by combination of these color attributes. Alternatively, the hatching determining means may identify differences in hatching density. In either case, the differences may then be used for determining region colors or hatching designs and hatching patterns for the regions. In addition, if a color or a hatching design/pattern is to be determined for each category, either a total area of all regions included in a category or largest area among regions included in a category is used to represent the region area of the category. Additionally, a degree of importance input from the importance-degree-request receiving means is used for determining a region color and the hatching design/pattern in accordance with a request for the degree of importance for each region and differences in degree of importance among elements of a graph. Finally, the input-picture generating means can generate a text picture with regions thereof colored with the determined colors and outputs text which undergone high-quality coloring and hatching.

In order to implement the processes described above in a graphic processing apparatus according to the invention, a user merely can specify regions in text to be colored and specifies proper colors for regions to undergo coloring. By doing so, colors matching the areas of the regions in the text can be colored on the regions so that the highlighting state of the regions each colored with a color can be kept uniform. As a result, high-quality colored text can be obtained.

Further, a user can merely specify regions in text to be colored with colors, can specify proper colors for regions to undergo coloring, and can then specify degrees of importance for the regions, in order to color the degrees of importance of the regions in the text. Thus, the highlighting state of a region to undergo coloring can be determined by its degree of importance. As a result, high-quality colored text that reflects the intention of the user can be obtained.

By specifying regions in text to be colored and the degrees of importance of the regions, it is possible to implement coloring that takes both the areas and degrees of importance of the regions into consideration. Accordingly, the highlighting states of regions based on the degrees of importance can be determined independently of the areas of the regions to be colored. As a result, high-quality colored text that reflects the intention of the user can be obtained.

For coloring, by decreasing the density for a region with a large area and raising the density for a region with a small area, the highlighting regions to be colored can be kept uniform. Alternatively, the highlighting of regions to be colored can be controlled by decreasing a density for a region with a low degree of importance, and raising a density for a region with a high degree of importance. As a result, high-quality colored text can be obtained.

Additionally, another aspect for specifying coloring, a chroma for a region with a large area may be lowered while a chroma for a region with a small area may be increased to keep highlighting of regions to be colored uniform. Alternatively, the highlighting of regions to be colored can be controlled by decreasing a chroma for a region with a low degree of importance and raising a chroma for a region with a high degree of importance. As a result, high-quality colored text can be obtained.

As still another aspect of specifying coloring, a density can be lowered and a non-vivid color, such as blue or green, can be used for a region with a large area, while a density can be increased and vivid color, such as red or yellow, is used for a region with a small area to keep the highlighting regions uniform. As an alternative, the highlighting of regions to be colored can be controlled by decreasing a chroma and using a non-vivid color for a region with a low degree of importance, or raising a chroma and using a vivid color for a region with a high degree of importance. As a result, high-quality colored text can be obtained.

As a still further way of specifying coloring, the chroma and density for a region with a large area can be lowered, while a chroma and density for a region with a small area can be increased to keep the highlighting of regions to be colored uniform. Alternatively, a highlighting of regions to be colored can be controlled by decreasing a density for a region with a large area, but raising a density for a region with a small area and by decreasing a chroma for a region with a low degree of importance but raising a chroma for a region with a high degree of importance. As a result, colored text with an even higher quality can be obtained.

Additionally, as yet another aspect of specifying coloring, a density can be lowered and a non-vivid color, such as blue or green, can be used for a region with a large area, while a density is increased and a vivid color, such as red or yellow, is used for a region with a small area to keep the highlighting to be colored uniform. As an alternative, a highlighting of regions to be colored can be controlled by decreasing a density for a region with a large area, but increasing a density for a region with a small area and using a non-vivid color for a region with a low degree of importance but using a vivid color for a region with a high degree of importance. As a result, another high-quality colored text can be obtained.

An additional way of specifying coloring, a chroma can be lowered and a non-vivid color, such as blue or green, can be used for a region with a large area, while a chroma can be increased and a vivid color, such as red or yellow, can be used for a region with a small area to keep the highlighting regions to be colored uniform. Alternatively, highlighting regions to be colored can be controlled by decreasing a chroma for a region with a large area, but increasing a chroma for a region with a small area and using a non-vivid color for a region with a low degree of importance but using a vivid color for a region with a high degree of importance. As a result, another high-quality colored text can be obtained.

In addition, as a still further aspect to specify coloring, a chroma and density for a region with a large area can be lowered while a chroma and density for a region with a small area can be increased to keep highlighting regions to be colored uniform. As an alternative, the highlighting regions to be colored can be controlled by decreasing a chroma for a region with a large area but increasing a chroma for a region with a small area and using a non-vivid color for a region with a low degree of importance but using a vivid color for a region with a high degree of importance. As a result, high-quality colored text can be obtained.

As a still further aspect to specify hatching designs and patterns, by changing a hatching design/pattern in accordance with the area of a region in text, hatching can be conducted with the area of each region considered and the highlighting regions to be colored uniform, independent of the areas of regions to be hatched. As a result, high-quality hatched text can be obtained.

As a further to specify hatching designs and patterns, a user specifies regions in text to be hatched or proper hatching designs and patterns for regions to be hatched and degrees of importance of the regions. Thus, hatching that matches the degree of importance of each region can be conducted and highlighting of each hatched region can be determined in accordance with the degree of importance. As a result, high-quality hatched text, which reflects the intention of a user can be obtained.

As still further aspect of specifying hatching designs and patterns, specifying degrees of importance for regions to be hatched, hatching that matches the degree of importance of each region can be conducted and highlighting of each hatched region can be determined based on the degree of importance thereof, independent of the area of the hatched region. As a result, high-quality hatched text which reflects the intention of a user can be obtained.

In addition, as yet a still further aspect of specifying hatching designs and patterns, collectively specifying areas and degrees of importance of categories, the highlighting can be uniform or highlighting states of the categories can be controlled, in accordance with the degree of importance. Thus, by using a sum of areas of all regions included in each category to represent the areas of the categorized regions, the highlighting states of the categories as a whole can be uniform.

Further, a yet another aspect of specifying hatching designs and patterns, by a largest area among all regions included in each category to represent the areas of the categorized regions, the highlighting of majority regions in the categories can be made uniform.

Additionally, as a further way of specifying hatching designs and patterns, decreasing a dot density for a region with a large area and increasing a dot density for a region with a small area, the highlighting of hatched regions can be uniform. As an alternative, highlighting of the regions can be controlled by decreasing a dot density for a region with a low degree of importance, and increasing a dot density for a region with a high degree of importance. As a result, high-quality hatched text can be obtained.

When hatching is conducted, by widening a hatching segment gap for a region with a large area and narrowing a hatching segment gap for a region with a small area, the highlighting of hatched regions can be uniform. As an alternative, the highlighting of the regions can be controlled by narrowing a hatching segment gap for a region with a high degree of importance and widening a hatching segment gap for a region with a low degree of importance. As a result, high-quality hatched text can be obtained.

In addition, in another example of hatching, a number of hatching overlaps is decreased for a region with a large area, while a number of hatching overlaps is increased for a region with a small area to keep the highlighting uniform. As an alternative; highlighting regions can be controlled by increasing the number of hatching overlaps for a region with a high degree of importance and decreasing the number of hatching overlaps for a region with a low degree of importance. As a result, high-quality hatched text can be obtained.

In addition, yet still another aspect of hatching, a hatching density is decreased for a region with a large area, while a hatching density is increased for a region with a small area to keep the highlighting uniform. As an alternative, a highlighting of regions can be controlled by increasing a hatching density for a region with a high degree of importance and decreasing a hatching density for a region with a low degree of importance. As a result, high-quality hatched text can be obtained.

Thus, a user can merely specify regions in text to be colored or specify proper color regions to be colored. Therefore, colors matching areas of regions in the text are applied to the regions so the highlighting can be uniform. As a result, high-quality colored text can be obtained.

Additionally, a user can merely specify regions in text to be colored or specify proper colors for regions to undergo coloring, and then can specify degrees of importance for the regions to implement coloring that matches the degrees of importance of the regions in the text. In this case, the highlighting is determined by its degree of importance. As a result, high-quality colored text, which reflects the intent of a user, can be obtained.

By specifying regions in text to be colored and alternatively degrees of importance of the regions, it is possible to implement coloring, which takes areas and degrees of importance of the regions into consideration. Accordingly, highlighting of regions, based on the degrees of importance, can be determined independent of the areas of the regions to be colored. As a result, high-quality colored text that reflects the intention of the user can be obtained.

Further, a density or chroma can be lowered or a non-vivid color, such as blue or green, can be used for a region with a large area, while a density or chroma can be increased or a vivid color, such as red or yellow, can be used for a region with a small area to keep the highlighting uniform. As an alternative, highlighting of regions to be colored can be controlled by decreasing a density or chroma or using a non-vivid color, such as blue or green, for a region with a lower degree of importance, while increasing a density or chroma or using a vivid color, such as yellow or red, for a region with a high degree of importance. As a result, high-quality colored text can be obtained.

Additionally, changing the type design and pattern of hatching, in accordance with an area of a text region, hatching can be conducted with an area of each region considered and the highlighting be kept uniform, independent of the areas of regions to be hatched. As a result, high-quality hatched text can be obtained.

In addition, a user can specify regions in text to be hatched or proper designs and/or patterns of hatching for regions to be hatched and degrees of importance of the regions. Thus, hatching that matches a degree of importance of each region can be conducted, and highlighting of each hatched region is determined in accordance with the degree of importance. As a result, high-quality hatched text which reflects the intention of a user can be obtained.

Still further, a user can specify regions in text to be hatched and degrees of importance of the regions. Hatching, which matches the area and the degree of importance of each region, can be then conducted, and highlighting may be determined in accordance with the degree of importance thereof independently of the area of the region. As a result, high-quality hatched text, which reflects the intention of a user can be obtained.

In addition, collectively specifying areas and degrees of importance of categorized regions and differentiating color attributes of regions in categories, can keep the highlighting states of the categories uniform, and/or the highlighting of the categories can be controlled based on the degree of importance. In addition, by collectively specifying areas and degrees of importance for categorized regions and differentiating hatching-density attributes for regions in categories, the highlighting can be uniform, or the highlighting of the categories can be controlled based on the degree of importance. In this case, by using a sum of areas of all regions included in a category to represent the categorized regions area, the highlighting states of the categories as a whole can be made uniform.

Additionally, by using a largest area among all regions included in a category to represent areas of the categorized regions, the highlighting can be uniform. Further, by decreasing a dot density, increasing a hatching segment gap, or reducing a number of hatching overlaps for a region with a small area and increasing a dot density, decreasing a hatching segment gap, or increasing a number of hatching overlaps for a region with a large area, the highlighting uniform. Alternatively, the highlighting of the regions can be controlled by decreasing a dot density, increasing a hatching segment gap, or reducing a number of hatching overlaps for a region with a low degree of importance and increasing a dot density, decreasing a hatching segment gap, or increasing a number of hatching overlaps for a region with a high degree of importance. As a result, high-quality hatched text can be obtained.

Further, by increasing a hatching density for a region with a small area and decreasing a hatching density for a region with a large area, the highlighting can be kept uniform. As an alternative, the highlighting can be controlled by decreasing a hatching density for a region with a low degree of importance and increasing a hatching density for a region with a high degree of importance. As a result, high-quality hatched text can be obtained.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.
Fig. 1 is a diagram showing an overall system configuration of a graphic processing apparatus as implemented by a first embodiment of the invention;
Fig. 2 is a diagram explaining a format for expressing color picture data stored in a text-picture memory unit;
Fig. 3 shows an example of a window specifying regions to be colored to an edit-region-request receiving unit;
Fig. 4 shows an example of a window specifying region colors to the region-color-request receiving unit;
Fig. 5 is a diagram explaining typical color-arrangement rules stored in a color-arrangement-rule holding unit;
Fig. 6 is a diagram used explaining a processing conducted by a region-area determining unit to calculate the area of a region;
Fig. 7 is a flowchart showing a processing for a process to color a region with a color conducted by a control unit of the graphic processing apparatus implemented by the first embodiment;
Fig. 8 is a diagram explaining the coloring of regions of a text picture wherein the densities of colors assigned to regions of the text are determined in accordance with the areas of the regions;
Fig. 9 is a diagram explaining the coloring of regions of a text picture wherein the densities and chromas of colors assigned to regions of the text are determined in accordance with the areas of the regions;
Fig. 10 is a diagram showing an overall system configuration of a graphic processing apparatus as implemented by a third embodiment;
Fig. 11 is a diagram showing an example of a window for entering a region category to a color/category-request receiving unit;
Fig. 12 is a diagram showing an example of a window for inputting the degree of importance to an importance-degree-request receiving unit;
Fig. 13 is a diagram explaining an example of color-arrangement rules stored in a color-arrangement-rule holding unit of the third embodiment;
Fig. 14 is a diagram explaining another example of the color-arrangement rules stored the a color-arrangement-rule holding unit of the third embodiment;
Fig. 15 is a flowchart showing a processing flow of a coloring process conducted on a region by a control unit employed in the graphic processing apparatus implemented by the third embodiment;
Fig. 16 is a diagram explaining coloring of regions of a text picture wherein the density of a color assigned to each of the regions in the text is determined in accordance with the degree of importance of the region;
Fig. 17 shows a diagram explaining an example of determination of densities in accordance with the region area and the degree of importance;
Fig. 18 shows an example of determination of a density and chroma of a color to be applied to a region in accordance with a combination of the area and degree of importance of the region;
Fig. 19 shows operations to carry out coloring by categorizing regions to be colored with a color;
Fig. 20 is a diagram explaining an example of determination of densities according to a total number of region areas pertaining to a category;
Fig. 21 is a diagram explaining an example of determination of densities according to a largest area among regions pertaining to a category;
Fig. 22 is a diagram showing an overall system configuration of a graphic processing apparatus as implemented by a fifth embodiment;
Fig. 23 is a diagram showing an example of a window for specifying a hatching design and a hatching pattern to the hatching/category-request receiving unit;
Fig. 24 is a diagram showing an example of a hatching detailed specification window; and
Fig. 25 is a flowchart showing a hatching process conducted by a control unit of the graphic processing apparatus implemented by the fifth embodiment.

The present invention will become apparent from the following detailed description of preferred embodiments with reference to accompanying diagrams.

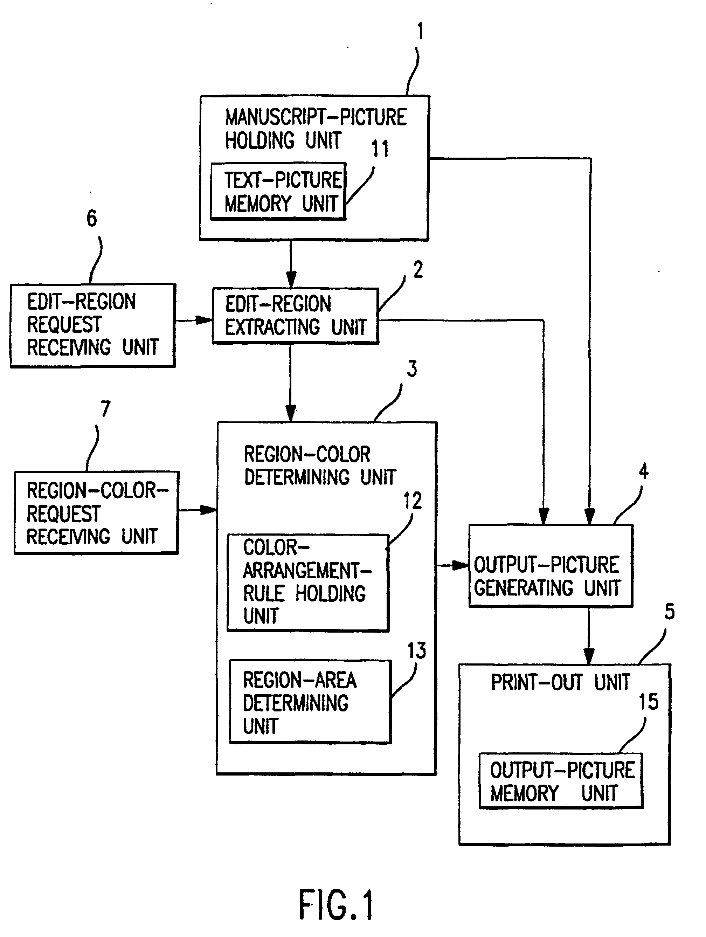

Fig. 1 is a diagram showing an overall system configuration of a graphic processing apparatus as implemented by a first embodiment in accordance with the invention. A manuscript-picture holding unit 1 includes an edit-region 2, a region-color determining unit 3, an output-picture generating unit 4, a print-out unit 5, an edit-region-request receiving unit 6, a region-color-request receiving unit 7, a text-picture memory unit 11, a color-arrangement-rule holding unit 12, a region-area determining unit 13 and an output-picture memory unit 15.

System components comprising a graphic processing apparatus are describing a case where the graphic processing apparatus is incorporated in a copy machine.

In the case of the copy machine, preferably, but not limited to a digital copy machine, a user specifies, among other things, regions in a text picture to be colored and colors for the specified regions or regions to be colored. In response to requests made by the user, the system components the graphic processing apparatus operate to determine the density, chroma and hue, in accordance with the areas of the regions to be colored. It also generates and outputs a high-quality colored picture.

The manuscript-picture holding unit 1 includes the text-picture memory unit 11. Text to be processed is read in for example by an image scanner and text-picture data can be, for example, by the image scanner. The text is temporarily stored in the text-picture memory unit 11 as digital color picture data.

A read unit, which comprises a light source and image scanner, applies a light generated by the light source to a thin long region in a main scanning, either horizontal or short-side direction, while relatively shifting the read position on a text picture in an auxiliary scanning, either vertical or long-side direction to read in text conducted by the image scanner employed in the copy machine. A light reflected by a scanned region is converged by a lens before being supplied to a CCD image sensor through each of R (red), G (green) and B (blue) filters.

The CCD image sensor converts the reflected light into an electrical signal(s) to convey information on intensity of the reflected light. The intensity information of the reflected light is converted into multi-value digital data for a color picture, for example by an AD converter, and temporarily stored in the text-picture memory unit 11 of the manuscript-picture holding unit 1.

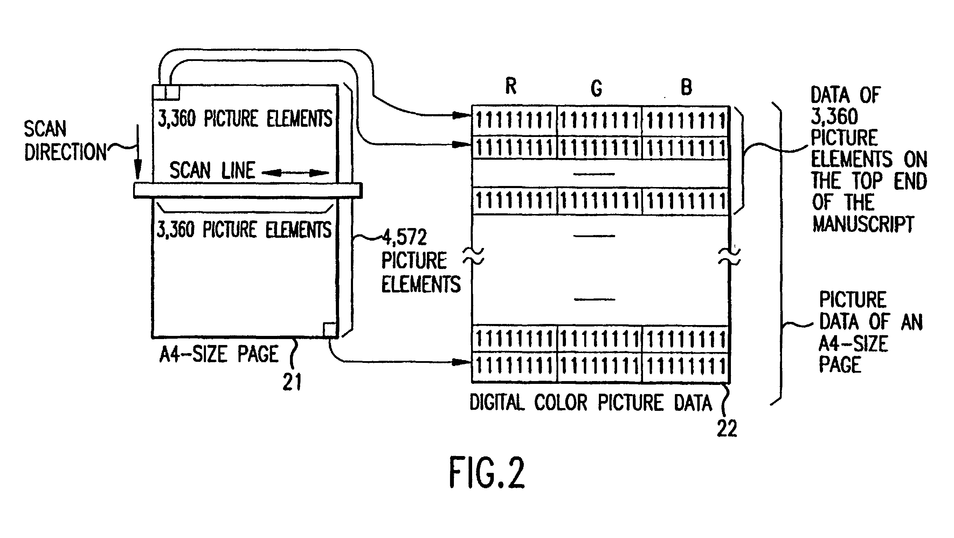

Fig. 2 is a diagram explaining a format for expressing the color picture data stored in the text-picture memory unit 11. As illustrated, the color picture data that is stored in the text-picture memory unit 11 is expressed as digital color picture data 22 having 256 tones of the three primary colors: R (red), G (green) and B (blue). A picture element of the digital color picture data 22 of a text manuscript 21, read by the image scanner, corresponds to a 0.0625mm square on an A4-size sheet of paper. in other words, there are 16 x 16 picture elements per 1mm² to result in a resolution of about 400 dpi. Data of a picture element is represented by 24 bits or data of three consecutive bytes. The first 8 bits of the 24 bits are 256-tone data of the R (red) color. The middle 8 bits of the 24 bits are 256-tone data of the G (green) color, and the last 8 bits of the 24 bits are 256-tone data of the B (blue) color. 8 bits set to "1" indicate a white color, while 8 bits set to "0" indicate a black color.

Digital color picture data 22 obtained from one scan operation corresponds to a manuscript written on an A4-size sheet of paper. It is represented by data of (3,360 x 4,752) consecutive picture elements. The order of pieces of picture-element data is fixed when they are read from a position on the manuscript of the picture-element data. The order in which pieces of picture-element data are stored in the text-picture memory unit is the same as the read-in order. In other words, the read-in order is a movement order of the optical scanning or the movement of a CCD line image sensor along the short-side, either horizontal or left-to-right direction, and the movement of the CCD line image sensor from a scan line to another in the long-side either vertical or top-down direction.

For example, an A4-size sheet of paper be placed in a portrait posture. The data of the first 3,360 picture elements starts with the left end of the uppermost line of the manuscript and continues with subsequent picture elements arranged on the line in the left-to-right order. A data of 3,360 picture elements is considered a set. The A4-size page of the manuscript contains 4,752 sets, which are arranged in the top-down order starting with the uppermost line of the page.

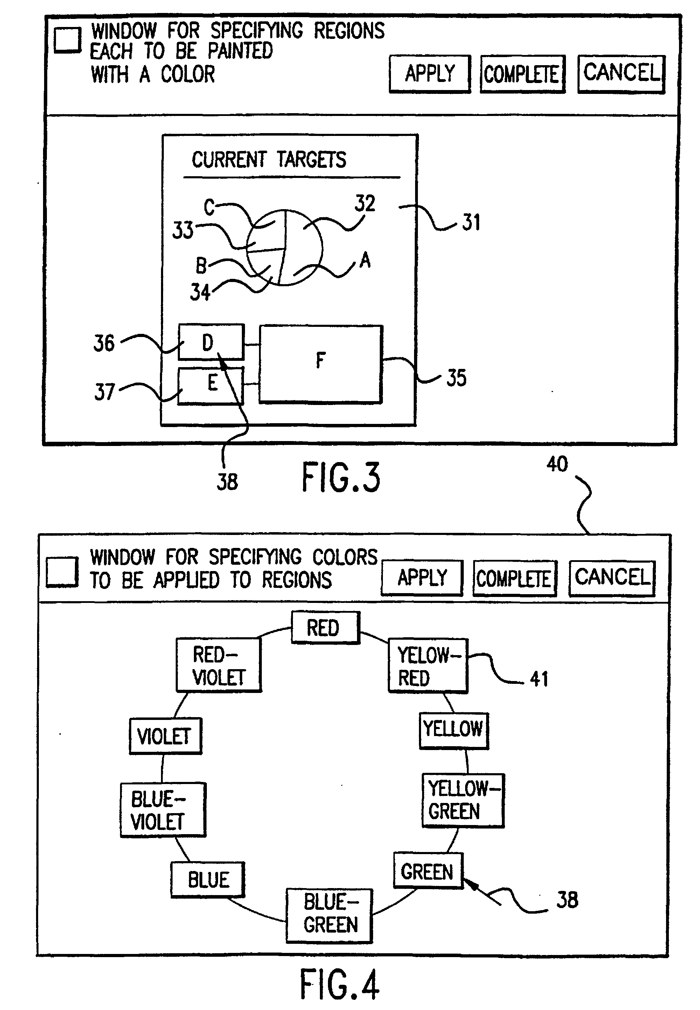

For example, to color a text picture in the manuscript, a text picture to be edited is displayed on a window for specifying regions, as in Fig. 3. A user then makes a request to color regions by means of a cursor or other pointing device. The edit-region-request receiving unit 6 conducts processing to receive a coloring request made by a user.

The edit-region-request receiving unit 6 receives a request to color a region on the manuscript from a user. An example of a window 30 for specifying regions to be colored to the edit-region-request receiving unit 6 is shown in Fig. 3. When a user specifies a region to be colored with a color in the manuscript, the window 30 is displayed on the screen. A scanned picture 31 is displayed on the window 30. Then, regions 32 to 37 that are to undergo coloring/editing are specified by a pointing cursor 38, which may be operated by a mouse.

In detail, the edit-region-request receiving unit 6 displays the scanned picture 31 that is temporarily stored in the text-picture memory unit 11 on the window 30 to specify regions to be colored. A user moves the pointing cursor 38 on the screen to the regions 32 to 37 of the scanned picture 31 by operating a pointing device such as a mouse or, for example a touch pen. The user can then make a request to select one region or a plurality of regions from the regions 32 to 37 to be edited.

The edit-region extracting unit 2 conducts processing to extract a closed region, i.e., a region to be colored with a color, including a point specified by the user in an edit region, which is specified by the edit-region-request receiving unit 6 as described above. In the processing to extract an edit region, the values of the 256 tones for the R (red), G (green) and B (blue) for the picture-element data at a point higher than the specified point of the edit object by one picture element in the digital color picture-element data 22 are examined. The values for the 256 tones of R (red), G (green) and B (blue) for the picture-element data are referred to hereinafter as RGB values. If the data represents a picture element close to black, that is, if the sum of the RGB values is equal to or smaller than 30, the address of the picture element is stored.

If the examined picture element is not close to black, the RGB values of the next upper picture element are examined. The examination of the RGB values of upper picture elements is continued one picture element after another till a black color is found. If a picture element of the black color is found, a black picture element adjacent to the found picture element is next sought. In this way, all black picture elements connected to each other to enclose the closed region including the specified point are identified.

In this process, the end point of picture-element data, i.e., the end of the text, is treated like a black picture element. The black picture elements enclosing the closed region including the specified point are traced. Returning to the first picture element of the black color, the address of which first picture element is stored. In this way, a line enclosing the specified point to be edited, i.e., the enclosed region, is extracted. If the tracing of black picture elements does not return to the first picture element, the RGB data of upper picture elements is examined, starting with the first black picture element, the address of which picture element was stored. The same is repeated till a closed region, including the specified point, is found.

The region-color-request receiving unit 7 conducts processing to receive a request for a color to be used in the coloring of the extracted region to undergo editing. An example of a window 40 for specifying region colors to the region-color-request receiving unit 7 is shown in Fig. 4. When regions on a manuscript specified by a user to be colored, colors that can be specified are displayed on a screen, which displays the window 40 for specifying region colors. A color is specified by selecting one color palette 41 displayed on the window 40. In this way, hues are displayed to a user through the window 40 for specifying region colors. A request of a hue for a color to be applied to a region made by the user is then received. As shown in Fig. 4, color palettes 41, each marked with a name of the color, are displayed in the color-phase order on circumference of a circle displayed on the window 40 to specify region colors. A user selects one of the color palettes 41. Typically, an extended function for a point between any two adjacent color palettes 41 is implemented, as follows. When a point between two adjacent color palettes 41 is pointed to by the pointer cursor 38, a color between two colors of the two adjacent color palettes 41 is specified.

After an edit region is extracted and a color for the extracted region is specified, the region-color determining unit 3 determines the density, chroma and hue, in accordance with an area of the region to be colored. The specified color is abided by the color-arrangement rules. Then, the output-picture generating unit 4 generates a high-quality colored picture.

The region-color determining unit 3 comprises a color-arrangement-rule holding unit 12 and the region-area determining unit 13 for carrying out this processing. Initially, the color-arrangement-rule holding unit 12 is explained.

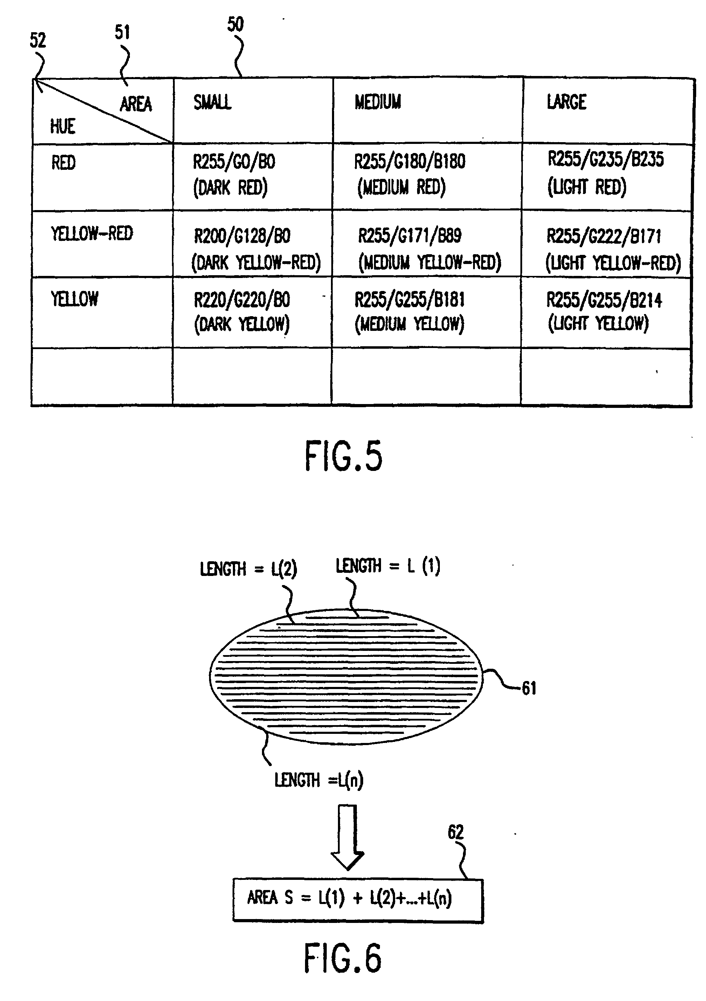

Fig. 5 is a diagram used for explaining color-arrangement rules stored in the color-arrangement-rule holding unit 12. The color-arrangement rules 50 prescribe region areas 51 and RGB values of a specified region color representing a color to be selected based on a hue 52 of the specified region color. Fig. 5 shows a look-up table for obtaining RGB values of an actual color arrangement for the region by using two parameters: 1) an area 51 of the region to be colored with a color, and 2) a hue 52 of the color used in the coloring. The color-arrangement rules shown in the look-up table express or define information for determining what density, chroma and hue are to be used in accordance with an area of a region. The color-arrangement rules are stored in advance for example, in a ROM (Read-Only Memory) unit. As shown in the figure, values of three tones for the RGB values of a region color are determined based on a specified hue and areas of specified regions. High and low-density colors are assigned to regions with small and large areas, respectively. Default values prepared in advance, or threshold values set by the user, serve as criteria to determine whether the area of a region is small, medium or large.

Next, operations conducted by the region-area determining unit 13 are explained. The region-area determining unit 13 computes an area of an extracted region to be edited. In other words, an extracted region to be colored with a color by counting the number of picture elements included in the region is computed.

Fig. 6 is a diagram explaining processing conducted by the region-area determining unit 13 to calculate the area of a region. As shown in the Fig. 6, to calculate the area of a region, the number of picture elements in the closed region 61 extracted by the edit-region extracting unit 2 is counted. First, the number of picture elements in a scan line (Li) is counted in the main scanning, either horizontal or short-side direction. The counting is repeated for all the scan lines Li, where i = 1 to n, in the auxiliary scanning either vertical or long-side direction, in the closed region 61 in order to determine the total number of picture elements 62, which represents the area of the closed region 61.

The area of a region to be colored with a color determined by the region-area determining unit 13 employed in the region-color determining unit 3 is used to determine a region color for the region, in accordance with color-arrangement rules stored in the color-arrangement-rule holding unit 12. In detail, the color-arrangement rules are referenced for determining actual RGB values, based on an area of the region to be colored with a color and a specified hue. In this way, the area of a region computed by the region-color determining unit 13 is used to determine the density and chroma of the color for the region, or actual values for the hue, in accordance with the color-arrangement rules.

When the color-arrangement rules are used for determining RGB values as described above, a determination is made whether the area of a region is small, medium or large by setting threshold values in terms of percents that define ranges of the area occupied by the region, as compared with the entire page. In other words, it defines the ranges of the picture-element count in the area as compared with a total picture-element count of 3,360 x 4,752. The threshold values are used in the determination of the RGB values. For example, the ranges up to 5%, 5 to 20% and greater than 20% correspond to small, medium and large areas respectively. These ranges can be used as default ranges.

As an alternative, a user can set the values limiting the ranges in advance. Given the ranges described above and a picture-element count of about 1,600,000 in the entire page, the size of an area is determined by using the number of picture elements Nr in the area as follows:
Nr < 800,000,
   the area is determined to be small;
800,000 ≤ Nr < 3,200,000,
   the area is determined to be medium; and
3,200,000 ≤ Nr,
   the area is determined to be large.
Then, a specified color can change from dark to light in the actual coloring, depending upon the range indicated by the parameter "small," "medium" or "large" indicating the relative size of the area.

For a region specified in the processing conducted by the region-color determining unit 3, as described above, colored-picture data is generated by the output-picture generating unit 4 as a digital picture that can be printed. In particular, the output-picture generating unit 4 receives text-picture data temporarily stored in the text-picture memory unit 11 of the manuscript-picture holding unit 1, data of regions to be colored from the edit-region extracting unit 2 and data of region colors from the region-color determining unit 3. It synthesizes a colored text picture from these pieces of information to generate data of an output picture. At that time, a processed picture, expressed in terms of RGB values according to the color-arrangement rules, is converted into printable color data in a color space, such as CMYK values corresponding to toner of a color copy machine. Portions of the picture other than the colored regions are output by reproducing the input manuscript with a high degree of fidelity, in accordance with the printing performance.

The print-out unit 5, which includes the output-picture memory unit 15, conducts processing to print out the text picture on a sheet of recording paper. The print-out unit 5 receives data of an output picture from the output-picture generating unit 4, and temporarily stores the data into the output-picture memory unit 15. The data of the output picture is transcribed and output to the paper by means of print mechanisms, such as a laser printer where a copy machine implemented by this embodiment, the picture is output in full color. For this reason, information on toner values of the cyan, magenta, yellow and black colors for each picture element is temporarily stored in the output-picture memory unit 15, to be later transmitted to each print mechanism. Additionally, laser-beam printer which is capable of printing data in full colors, a picture can also be printed out by utilizing a marking technology, such as the ordinary paper thermal transcription.

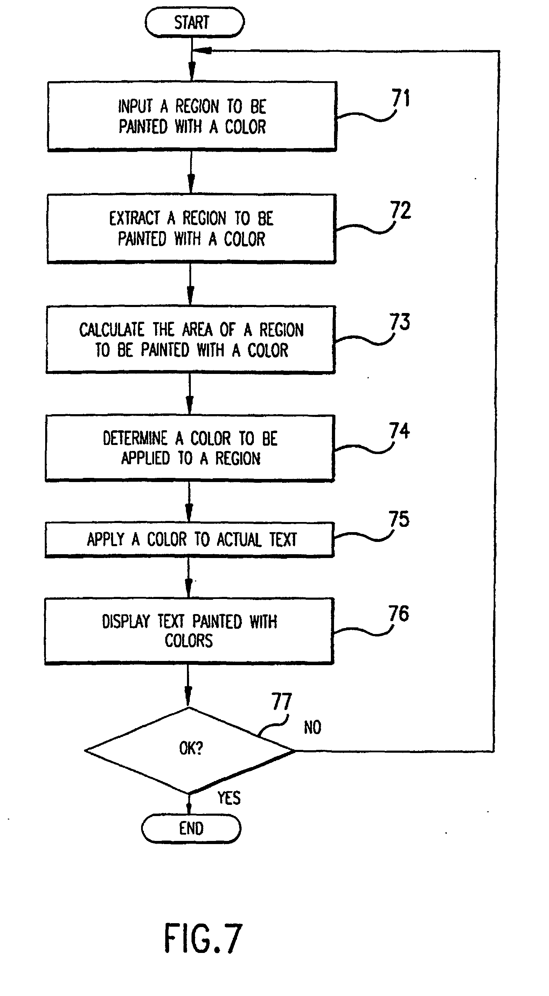

Fig. 7 is a flowchart showing a process to color a region with a color conducted by a control unit of the graphic processing apparatus, according to the first embodiment of the present invention. In Fig. 1, the control unit of the graphic processing apparatus is not illustrated. The control unit controls the system components to carry out a coloring process on a text picture, in accordance with a processing in Fig. 7.

Coloring a region conducted by the control unit of the graphic processing apparatus implemented by the first embodiment is explained by referring to the flowchart shown in Fig. 7. The processing starts with step 71, at which processing to input locations indicating regions to be colored is conducted. At step 71, a scanner is controlled to read in a text picture and temporarily store it into the text-picture memory unit 11 of the manuscript-picture holding unit 1. Then, the edit-region-request receiving unit 6 displays the picture data stored in the text-picture memory unit 11 on a window 30 for specifying regions to be colored, as shown in Fig. 3. A command specifying regions to be colored is received. Subsequently, a window 40 for specifying region colors, shown in Fig. 4, is displayed.

The request received by the edit-region-request receiving unit 6 to specify regions to be colored is made by a user by means of a pointing device, such as a mouse for pointing to each of the regions to be colored with a color. For example, a region D is selected by having the pointing cursor 38 point to the region D. Subsequently, the color palette of the green color in the window 40 for specifying region colors, shown in Fig. 4 is specified by using the pointing cursor 38, in a similar same way as the selection of the region D. By doing so, the green color is specified for the selected region D in the text picture 31. Likewise, other regions can be selected, and colors can be specified for the other selected regions. In this example, red and blue are specified for the selected regions A and B, respectively, whereas green is specified the for selected regions C and D, and another selected region E. As for a selected region F, blue is specified.

After step 71 inputs locations representing regions to be colored, wherein regions to be edited are selected and colors for the regions are specified, is completed, step 72 extracts each region to be colored with a color. In detail, when a request to color each region is received, the edit-region extracting unit 2 extracts the regions to be edited. To extract a region, a closed region enclosing a point, specified as an object to be colored with a color, is extracted. A closed region is extracted by examining RGB values of a point higher than the specified point of the edit object by one picture element. If RGB values represent a picture element close to black, the address of the picture element is stored. If the examined picture element is not close to black, RGB values of the next upper picture element are examined. The examination of RGB values of upper picture elements is continued one picture element at a time until black is found.

If a black picture element is found, black picture element adjacent to the found picture element is next sought. In this way, all black picture elements connected to each other to enclose the closed region, including the specified point, are identified. The black picture elements enclosing the closed region including the specified point are traced, returning to the first black picture element, which is the address of a stored picture element. Additionally, when a color in the text is specified as a region color, a closed region including a location pointed to, to specify the color is searched for a picture element, all the bits are not zeros or ones. The color of this picture element is then taken as a specified color. It should be noted that RGB values are represented by 24-bit data.

The processing proceeds to step 73 to compute the area of a region. As shown in Fig. 6, to calculate the area of a region, a number of picture elements included in a closed region extracted in a process to extract an edit region is counted. First, the number of picture elements in a scan line (Li) is counted in the main scanning, either horizontal or short-side direction. The counting is repeated for all scan lines Li, where i = 1 to n, in the auxiliary scanning, either vertical or long-side direction in the closed region to find the total number of picture elements, which represents the area of the closed region. As a result, the areas of the regions to be colored, i.e., the numbers of picture elements in the regions, are found. For example: 1,200,000 in the region A, 300,000 in the region B, 850,000 in the region C, 1,000,000 in the region D, 1,000,000 in the region E and 4,000,000 in another selected region F in Fig. 6.

The processing at step 74 determines a color for each region A to F. The area of each of the regions A to F is determined to be small, medium or large by comparing the number of picture elements in the region with reference values, as described earlier. In other words, a picture-element count of 800,000 is used as a threshold value between small and medium areas, whereas a picture-element count of 3,200,000 is used as a threshold value between medium and large areas. Color-arrangement rules are then used to determine the coloring of each of the regions A to F, in accordance with the judgment result. To be more specific, determining whether the area of a region is small, medium or large is based on the number of picture elements in the region as follows:
Region A: The number of picture elements is 1,200,000: medium.
Region B: The number of picture elements is 300,000: small.
Region C: The number of picture elements is 850,000: medium.
Region D: The number of picture elements is 1,000,000: medium.
Region E: The number of picture elements is 1,000,000: medium.
Region F: The number of picture elements is 4,000,000: large.

The above results regarding the areas and information on colors for the selected regions given by the user are used to determine regions colors, as follows:
Region A = Medium red
Region B = Dark blue
Region C = Medium green
Region D = Medium green
Region E = Medium green
Region F = Light blue

The processing continues at step 75 to add region colors determined at step 74 to the actual text. Next at step 76 displays the text to which the colors have been applied. Then, at step 77 an inquiry is displayed to the user, asking the user whether the results of coloring the regions are satisfactory. A user's response to the inquiry received is then evaluated.

If the response received from a user confirms that the results of the region coloring are satisfactory, the processing is complete. If the user is not satisfied with the processing results, the processing flow returns to step 71 to repeat the process from step 71.

The region colors determined by the process conducted are applied to the text picture by controlling the output-picture generating unit 4, the resulting text-picture data is temporarily stored in the output-picture memory unit 15 employed in the print-out unit 5 to be later output by the print-out unit 5. The resulting text-picture data stored in the output-picture memory unit 15 is displayed on the screen of a display unit to be previewed by a user. If the user is not satisfied with the results, the processings are once again conducted.

Modifications of system components composing the graphic processing apparatus implemented by the first embodiment are now explained. As shown in Fig. 3, the edit-region-request receiving unit 6 of the first embodiment displays a window 30 for specifying regions to be colored on the screen including a scanned picture 31 and the regions 32 to 37 pointed to by the pointing cursor 38 (which may be driven by a mouse) are selected as regions to undergo color editing as described earlier. Here, a command inputting unit, such as an editor pad for specifying regions to be colored, can be used. For example, the editor pad could be a "A Color", a trademark of Fuji Xerox Corporation for its full-color copy machine. As an alternative, it is also possible to use a command inputting unit that recognizes an enclosed region including a position on a manuscript marked by a marker pen with a specific color.

Another version of the edit-region-request receiving unit 6, a closed region including a picture element with a color other than black and white is recognized among data stored in a picture memory unit. In this case, a closed region is identified as a region to be colored with a color and the color of a picture element included in the closed region is considered as a region color. A text picture is searched for a picture element, where its bits are neither all zeros nor all ones. The color of the picture element is used as a specified region color and coordinates of the picture element are used as coordinates of a specified point.

As described above, for a manuscript composed of colored text, a color in a closed region of a region specified and extracted as an editing object is used as a color for the specified region. The processing can then be carried out without specifying a region color by the color-region-request receiving means 7. In a closed region to be edited including a plurality of colors, a color of majority picture elements constituting the closed region is used as a region color. Alternatively, a request made by the user to select a region color is received.

In the color-arrangement rules stored in the color-arrangement-rule holding unit 12 of the first embodiment, an area and density segments can each be further divided into smaller subsegments, and their relations can be prescribed in further detail. In addition, color specifications for region colors defined by the relation between the area and density can be expressed in terms of YMCK values or coordinates in a color space system, such as a Munsell color system. In addition, a hue can also be further classified.

Additionally, color-arrangement rules stored in the color-arrangement-rule holding unit 12 can also be expressed in terms of relations between an area and chroma. For example, color-arrangement rules are set so that a high chroma is applied to a small area, while a non-striking low chroma is suitable for a large area. Thus, unbalanced highlighting states caused by differences in area among regions of a manuscript picture can be avoided.

Further, color-arrangement rules stored in the color-arrangement-rule holding unit 12 can also be expressed in terms of relations between an area and hue. For example, color-arrangement rules are set so a hue close to red, which is striking as well as vivid, is used for a region with a small area. A hue close to blue, which is not striking or vivid, is applied to a region with a large area. In this way, unbalanced highlighting states caused by differences in area among regions of a manuscript picture can be avoided.

Furthermore, color-arrangement rules stored in the color-arrangement-rule holding unit 12 can also be expressed as combinations of relations between the area and density, chroma and hue in order to effectively avoid unbalanced highlighting states caused by differences in area among regions for a manuscript picture. For example, by combining chroma with density, the highlighting states can be finely controlled. Differences in density on a document easily recognized are classified into about four stages. By combining the chroma with hue, however, more grades can be used for expressing highlighting states.

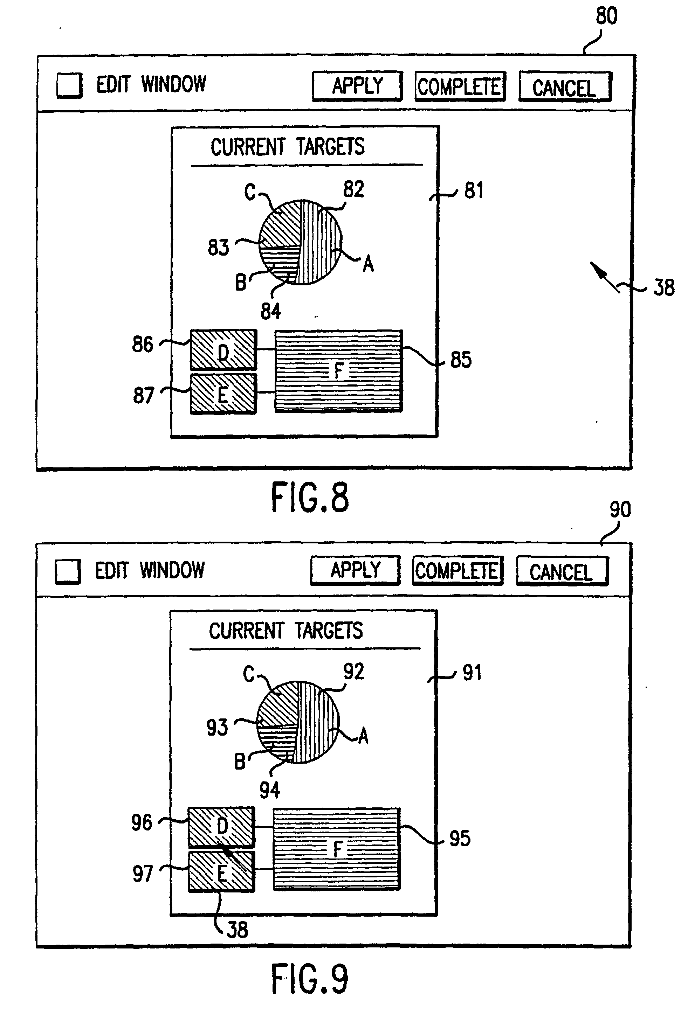

Fig. 8 is a diagram to explain coloring of regions in a text picture where densities of colors assigned to regions of the text are determined based on areas of the regions. In this case, processing to calculate the area of each region to be colored with a color or a region serving as an object to undergo color editing is conducted as described earlier. For example, the picture-element count in the regions to be colored be 1,200,000 for region A, 300,000 for region B, 850,000 for region C, 1,000,000 for region D, 1,000,000 for region E and 4,000,000 for region F. Subsequently, the number of element pictures in each of the regions is compared with typical threshold values 800,000 and 3,200,000. If the number of element pictures in a region is smaller than 800,000, the region is determined to be small. If the number of element pictures in a region is greater than 800,000 but smaller than 3,200,000, on the other hand, the region is determined to be medium. If the number of element pictures in a region is greater than 3,200,000, the region is determined to be large. Then, the color-arrangement rules are applied in accordance with results of the judgment, and colors specified for the regions to determine coloring for each region.

The results of the judgment determination region colors are as follows:
Region A: The number of picture elements is 1,200,000, thus it is medium and assigned a medium red color.
Region B: The number of picture elements is 300,000, thus it is small and assigned a dark blue color.
Region C: The number of picture elements is 850,000, thus it is medium and assigned a medium green color.
Region D: The number of picture elements is 1,000,000, thus it is medium and assigned a medium green.
Region E: The number of picture elements is 1,000,000, thus it is medium and assigned a medium green color.
Region F: The number of picture elements is 4,000,000, thus it is large and assigned a light blue color.

The above coloring states are displayed on an edit window 80 for previewing a text picture 81, as shown in Fig. 8. As shown, regions of the text picture are each colored with a color as follows: region 82 is colored with a medium red color; region 83 is colored with a medium green color; region 84 is colored with a dark blue color; region 85 is colored with a light blue color; and regions 86 and 87 are colored with a medium green color. For a variety of regions in a text picture, the smaller the region, the darker the color assigned to the region. Conversely, the larger the region, the lighter the color assigned to the region.

Coloring can be changed by modifying color-arrangement rules stored in the color-arrangement-rule holding unit 12. Fig. 9 is a diagram explaining the coloring of regions of a text picture, where the densities and chromas of colors assigned to regions of the text are determined in accordance with the areas of the regions. In this case, color-arrangement rules stored in the color-arrangement-rule holding unit 12 prescribe a combination or relations between the area and density, chroma and hue. With such color-arrangement rules, a text picture, with variances in highlighting states caused by differences in areas of the regions, are effectively eliminated as shown in Fig. 9.

In particular, in the edit window 90 for previewing a text picture, regions in the text picture 91 are each colored with a color as follows: region 92 is colored with a red color having a low chroma and a medium density; region 93 is colored with a green color having a medium chroma and a medium density; region 94 is colored with a blue color having a high chroma and a high density; region 95 is colored with a blue color having a low chroma and a low density; region 96 is colored with a green color having a high chroma and a medium density; and region 97 is colored with a green color having a high chroma and a medium density.

By comparing Fig. 9 with Fig. 8, it is clear that region 83 or region C; region 86 or region D; and region 87 or region E shown in Fig. 8 are assigned the same color and not differentiated from each. Further, region 93 or region C; region 96 or region D; and region 97 or region E; shown in Fig. 9 are assigned colors having different attributes.

In this way, a combination of a chroma and density is determined for each region in a text picture, in accordance with the area of the region. The smaller the area of a region, the higher the chroma and the higher the density of the color used for coloring the region. Conversely, the larger the area of a region, the lower the chroma and the lower the density of the color used for painting the region. Thus, the state of highlighting can be controlled even more finely. Differences in density can be easily recognized and classified into about four stages. By combining the chroma with hue, more grades can be used for finely expressing highlighting states.

Next, a second embodiment implementing a graphic processing apparatus in a workstation is explained. The graphic processing apparatus implemented by the first embodiment described above handles only scan-in or raster pictures. The second embodiment is an example of a graphic processing apparatus that handles code information, in addition to raster pictures.

Since the second embodiment has the same configuration of the first embodiment, no diagram is provided showing the second embodiment is given. Only differences in system components between the first and second embodiments are explained. Here, for the sake of convenience, the explanation is given by referring to Fig. 1.

A system component that corresponds to the manuscript-picture holding unit 1 employed in the first embodiment is implemented in the second embodiment by a working memory of a WYSIWYG ("What You See Is What You Get") editor. Having a graphical user interface function, the WYSIWYG editor can draws pictures. The working memory is used for storing code information for constructing a text picture. It is also necessary to allocate a text-picture memory area for laying out a text picture based on the code information in the working memory. The text-picture memory area corresponds to the text-picture memory unit 15 in the first embodiment.

A system component that corresponds to the edit-region-request receiving unit 6 employed in the first embodiment is implemented in the second embodiment by a graphical user interface screen to specify and select regions on a text picture to be colored by the WYSIWYG editor. Such regions are specified and selected, for example, by a pointing device, such as a mouse. The graphical user interface screen is similar to the window 30 of the first embodiment to specify regions to be colored as in Fig. 3. The system component may comprise a subsystem component for taking a closed region including color information as a specified region: a subsystem component for requesting a region by using text information included in a closed region; and a subsystem component for taking a region matching a text stored in a data base as a specified region.

A system component that corresponds to the edit-region extracting unit 2 employed in the first embodiment is implemented in the second embodiment by a processing module that loads a closed region, i.e., a region based on code information specified and selected by using a graphical user interface screen corresponding to the edit-region-request receiving unit 6 into a working memory, other than the text-picture memory area. In addition, a system component that corresponds to the region-area determining unit 13 is a processing module for counting a number of picture elements included in a specified region and selected by using the graphical user interface screen that corresponds to the edit-region-request receiving unit 6. The region is loaded into a working memory, other than the text-picture memory area, and then displayed on the screen to calculate the area of the region. Processes conducted in accordance with a processing procedure are generally similar as the processes of a copy machine implemented by the first embodiment.

The other system components of the second embodiment are generally the same as those in the first embodiment. To be more specific, the region-color-request receiving unit 7, color-arrangement-rule holding unit 12, region-color determining unit 3, output-picture generating unit 4 and print-out unit 5 are generally the same as those in the first embodiment.

Next, operations of the graphic processing apparatus comprising the system components described above of the second embodiment are explained. Since most of the system components are the same as those in the first embodiment, the operation flow is explained by referring to Fig. 7. For this reason, the operations of the graphic processing apparatus implemented by the second embodiment can be briefly explained.

The procedure of the graphic processing apparatus of the second embodiment is generally the same as the processing of the first embodiment, shown in Fig. 7. A text manuscript to be processed is read in, and temporarily stored in the manuscript-picture holding unit 1. A picture of the text manuscript to be processed is read in from a main memory unit by the WYSIWYG editor, and temporarily stored in a picture memory unit. Alternatively, a picture is drawn by a user directly on the picture memory unit by using editor functions, and temporarily stored.

Next, regions to be colored are selected through the window 30 to specify each region to be colored with a color by operating a pointing device, such as a mouse as shown in Fig. 3. A closed region is then extracted, in generally the same way as the first embodiment. In this case, instead of entering a command by operating the pointing device, functions of a key board or a menu displayed on a graphical interface screen can also be used. In with a menu, by requesting a text [D] from the menu, a region including a text code [D] is specified. The associated processing module actually works as follows. When the user enters text code [D], the system searches code information for text [D] to find a location on the text-picture memory area at where the text [D] is located. Then, the coordinates of the location are used to represent a specified point, and a closed region is extracted as in the first embodiment.

A color can be specified by using the window 40, shown in Fig. 4 to specify colors, or if information on color exists in a region including the text [D], the color can be regarded as a region color. As an alternative, information stating: "The region including D is assigned the green color," is initially stored in a color specifying data base, which is prepared in advance. A region color can then be specified by referencing the color specifying data base.

Processing to calculate the area of a region to be colored with a color is conducted by using a text-picture memory area as in the first embodiment. The area of a region and specified color are then used to determine a region color from a table prescribing color-arrangement rules, as shown in Fig. 5. Then, the determined region colors are used to alter the manuscript picture in the text-picture memory area for preview. If a user enters a print-out command, RGB values of colors displayed on the display screen are converted into CMYK values of color information for printing purposes. Results of the conversion are loaded into the output-picture memory unit to be output to a print-out unit.

Next, a third embodiment implementing a graphic processing apparatus provided by the present invention is explained. In the first embodiment, a user specifies regions in a text picture to be colored and colors to be applied to the regions or regions to be colored with the same color. The area of each region to be colored with a color is then calculated, and the area is used to determine the density, chroma and hue of a color assigned to the region, in accordance with color-arrangement rules. Finally, a high-quality picture is generated and output. Adding categories as parameters to the color-arrangement rules will result in a scheme that allows the user to create a high-quality picture. Such a configuration is implemented by the third embodiment explained as follows.

In the case of the graphic processing apparatus of the third embodiment, a user can specify regions in a text picture to be colored and colors to be applied to the regions, or regions to be colored with the same color, categories each serving as a set of a plurality of regions to be colored with the same color and the degree of importance of each of the specified regions or categories. The area of each region or category to be colored with a color is then calculated by the system, and the area and degree of importance are used to determine the density, chroma and hue of a color assigned to the region, or the category in accordance with the color-arrangement rules. Finally, a high-quality picture is generated and output.

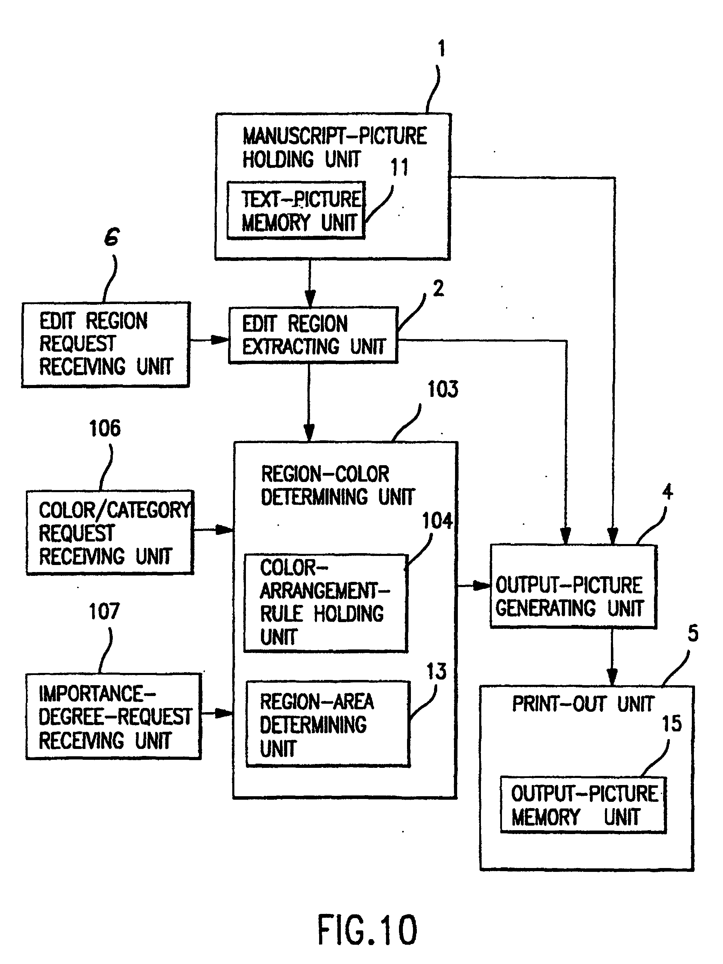

Fig. 10 shows an overall system configuration of a graphic processing apparatus according to the third embodiment of the present invention. The apparatus includes manuscript-picture holding unit 1 denotes an edit-region extracting unit 2, an output-picture generating unit 4, a print-out unit 5 an edit-region-request receiving unit 6, a text-picture memory unit 11, a region-area determining unit 13, an output-picture memory unit 15, a region-color determining unit 103, color-arrangement-rule holding unit 104, a color/category-request receiving unit 106 and an importance-degree-request receiving unit 107.

In the graphic processing apparatus of the third embodiment in Fig. 10, system components identical with those used in the graphic processing apparatus of the first embodiment are denoted by the similar reference numerals. Thus, the manuscript-picture holding unit 1, the edit-region extracting unit 2, the output-picture generating unit 4, the print-out unit 5, the edit-region-request receiving unit 6, the text-picture memory unit 11, the region-area determining unit 13 and the output-picture memory unit 15 are generally the same as those in the graphic processing apparatus of the first embodiment.

In the graphic processing apparatus according to the third embodiment, the color/category-request receiving unit 106 and the importance-degree-request receiving unit 107 are used as substitutes for the region-color-request receiving unit 7 in the first embodiment. With the color/category-request receiving unit 106 and the importance-degree-request receiving unit 107, the color-arrangement-rule -holding unit 104 stores color-arrangement rules, which includes the following parameters: the color, category and degree of importance. In accordance with these color-arrangement rules, the region-color determining unit 103 determines a color to be applied to each region depending upon the area of the region.

Next, system components comprising the graphic processing apparatus implemented by the third embodiment are explained. The color/category-request receiving unit 106 receives a command from a user) to indicate the hue of a color to be applied to each region to be colored with a color or a group or category of regions to be colored with the same color. For example, in where a text picture having a plurality of regions to be colored with the same color, the regions are treated as a category. Then, these regions are collected in the same group, and handled as a category corresponding to the group.

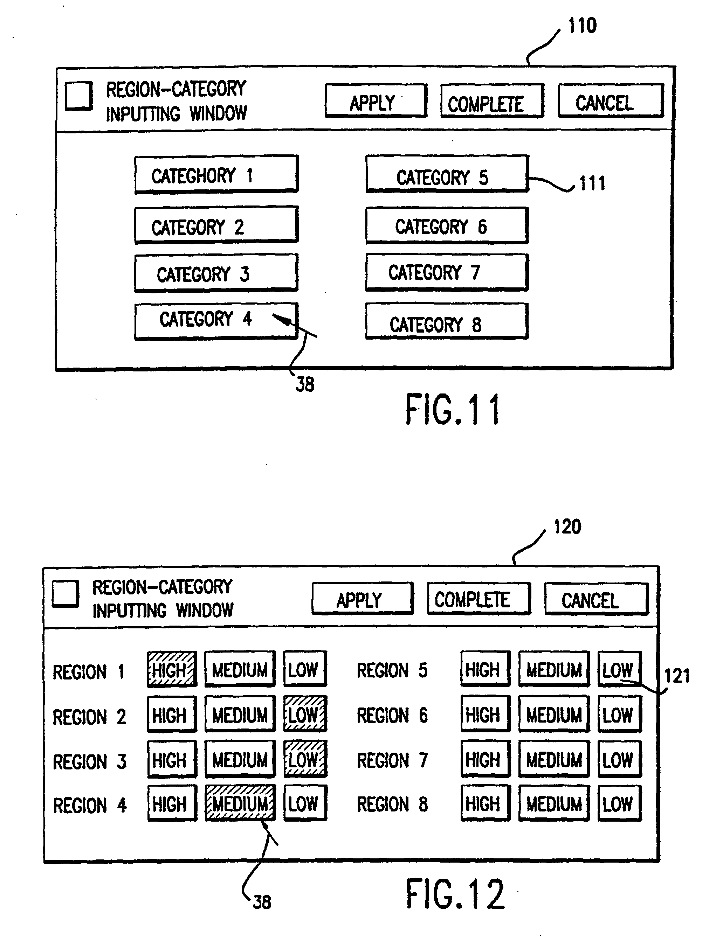

Fig. 11 is a diagram showing a window for entering a region category to the color/category-request receiving unit 106. The operation to specify a category for a region is explained with reference to Fig. 11. Regions to be edited are specified through the window 30, shown in Fig. 3, for specifying regions to be colored. In Fig. 11, a category number is specified for the regions through a window 110 for inputting region categories. In particular, after some regions are specified, a category number 111 is specified through the window 110 for inputting region categories. In this way, the same category number is assigned to a plurality of specified regions. For example, category 1 = {region a, region b, region c} means that a plurality of regions a; b; and c are cataloged in a category indicated by No. 1.

A color for a category, including a plurality of regions, is specified in the same way as in the first embodiment. For example, the name of a color specified for a category is the name of a color to be applied to the region for the region through the window 40 for specifying region colors, as shown in Fig. 4. A region color is requested by operating a touch panel or a pointing device, such as a mouse, to have the pointing device point at a color palette for the region color.

Fig. 12 is a diagram showing an example of a window 120 for inputting the degree of importance to the importance-degree-request receiving unit 107. The importance-degree-request receiving unit 107 receives a command from a user to indicate the degree of importance i.e., state of highlighting. An operation to specify the degree of importance for a region is explained by referring to Fig. 12.

The degree of importance for a region or a category is specified by a user either in a separate operation to enter the degree of operation or simultaneously with the operation to enter a region to be colored with a color. In either case, a user either enters a number representing the degree of importance for a region or a category or operates a language menu button, such as "High," "Medium" or "Low", representing the degree of importance or a slider by using a screen input user interface function through the window 120 to input the degree of importance, shown in Fig. 12.

The color-arrangement rules stored in the color-arrangement-rule holding unit 104 of the third embodiment prescribe colors used in color arrangement with the degree of importance, hue and area as parameters. As for the first embodiment, the color-arrangement rules are summarized in a look-up table to obtain actual RGB values, in accordance with two parameters: the area of a region to be colored with a color and the hue of the color to be used for coloring. In the third embodiment, the color-arrangement rules are summarized in a look-up table for obtaining actual RGB values in accordance with the degree of importance in addition to the two parameters used in the first embodiment.

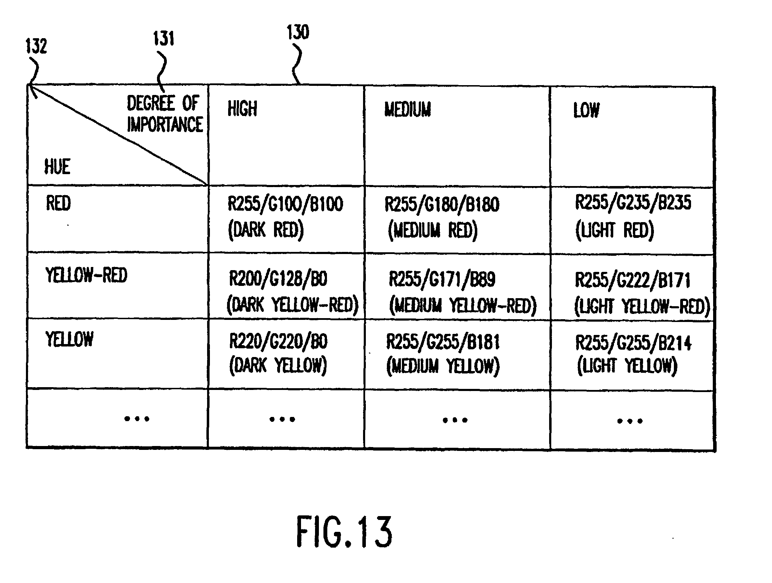

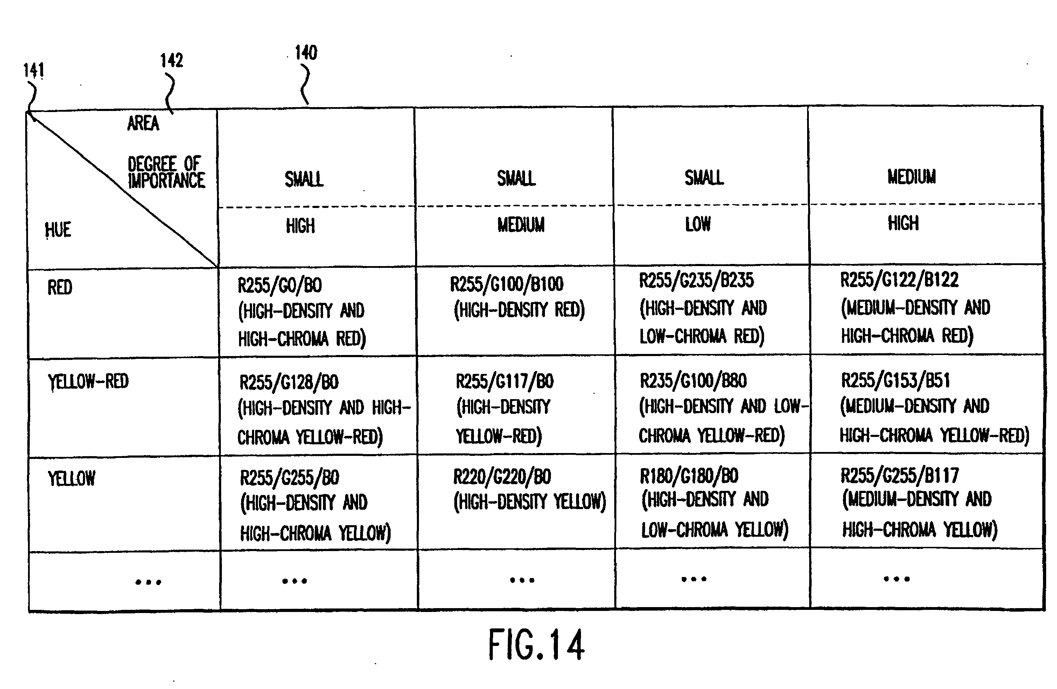

Figs. 13 and 14 are diagrams for explaining examples of the color-arrangement rules 130 and 140 stored in the color-arrangement-rule holding unit 104. The color-arrangement rules 130 shown in Fig. 13 prescribe RGB values of specified colors to select actual color-arrangement colors, in accordance with the degree of importance 131 and the hue 132 of the specified region color. The color-arrangement rules are prescribed so that the higher the degree of importance, the darker the coloring, or, conversely, the lower the degree of importance the lighter the coloring. The color-arrangement rules 130 shown in Fig. 13 are summarized in a look-up table for obtaining actual RGB values of actual color-arrangement colors in accordance with two parameters: the degree of importance 131 and the hue 132 of the color specified for coloring.

In addition, when the area of a region is used as an additional parameter for the color-arrangement rules 140, the hue is used as a parameter 141 while a combination of the degree of importance and area is used as another parameter 142 as shown in Fig. 14. Thus, according to the color-arrangement rules 140, high, medium and low densities are assigned to small, medium and large region areas, respectively; and high, medium and low chromas are assigned to high, medium and low degrees of importance of regions, respectively.

The color-arrangement rules 140 prescribe RGB values of specified colors for selecting actual color-arrangement colors. It is clear from the color-arrangement rules 140 that, the higher the degree of importance the darker the coloring, or conversely, the lower the degree of importance the lighter the coloring. In addition, the smaller the area of a region, the higher the chroma at which the region is colored with a color, conversely, the larger the area of a region the lower the chroma at which the region is colored.

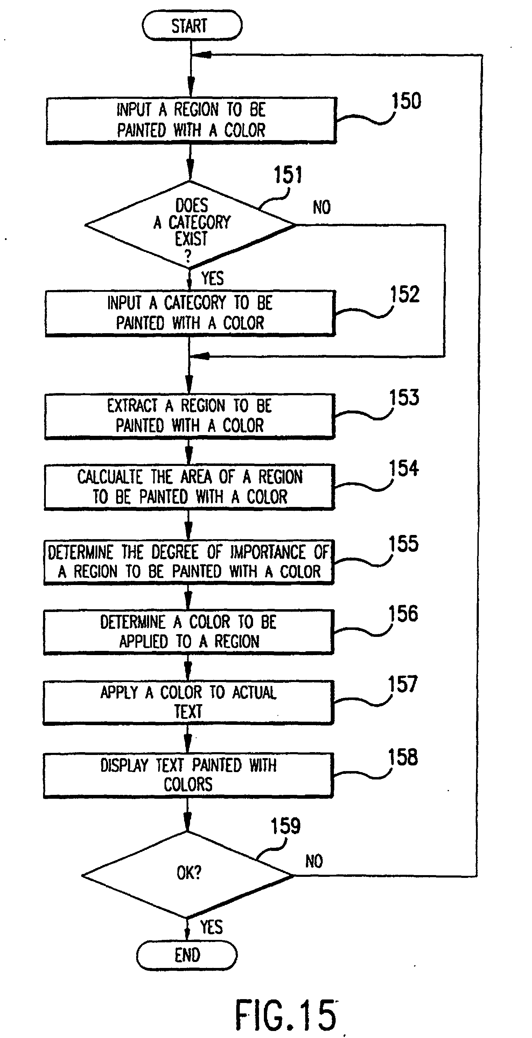

Fig. 15 is a flowchart showing a coloring process conducted on a region by a control unit in the graphic processing apparatus according to the third embodiment of the invention. The processing flow of the coloring process conducted by the third embodiment is generally the same as the first embodiment. Differences between them include a category for collecting regions to be colored with the same color, and the degree of importance that can be specified.

As shown in Fig. 15, the processing begins with step 150 to input locations representing regions to be colored. At step 150, a scanner is controlled to read in a text picture, and temporarily store it into the text-picture memory unit 11 of the manuscript-picture holding unit 1. Then, the edit-region-request receiving unit 6 is controlled to display the picture data stored in the text-picture memory unit 11 on a window 30 to specify regions to be colored, as shown in Fig. 3. A command specifying regions to be colored of the picture is then received. Subsequently, a window 40 for specifying region colors shown in Fig. 4 is displayed.

The processing at step 151 determines whether a category exists. If a category exists, the processing proceeds to step 152 to input a color used for coloring the category. The processing then continues to step 153. However, no category exists, the processing flow continues from step 151 directly to step 153. At step 153, processing extracts a region to be colored with a color. In other words, when a command indicating a region to be colored with a color is received, the edit-region extracting unit 2 is controlled to extract the region to be edited, as in the case of the first embodiment previously described.

To extract a region, a closed region enclosing a point specified as an object to be colored with a color is extracted. A closed region is extracted by examining RGB values of a point higher than the specified point of the edit object by one picture element. If the RGB values represent a picture element close to black, the address of the picture element is stored. If the examined picture element is not close to black, RGB values of the next upper picture element are examined. The examination of the RGB values of upper picture elements is continued one picture element after another until black is found. If a black picture element is found, a black picture element adjacent to the found picture element is next sought. In this way, all black picture elements connected to each other, that enclose the closed region including the specified point, are identified. The black picture elements enclosing the closed region including the specified point are traced, returning to the first black picture element, the address of which picture element was stored.

Additionally, when a color in the text is specified as a region color, a closed region, including a location pointed to for specifying the color is searched for a picture element, all the bits of which are neither zeros nor ones. The color of this picture element is then taken as a specified color. It should be noted that RGB values are represented by 24-bit data.

The processing proceeds to step 154 to compute the area of a region to be colored with a color as in Fig. 6. To calculate the area of a region, a number of picture elements included in a closed region extracted in a process to extract an edit region is counted, as follows. The number of picture elements in a scan line (Li) is counted in the main scanning, either horizontal or short-side direction. The counting is repeated for all the scan lines Li, where i = 1 to n, in the auxiliary scanning either vertical or long-side direction in the closed region to find the total number of picture elements that represents the area of the closed region.

The processing at step 155 identifies the degree of importance for a region to be colored with a color. In the processing to determine the degree of importance for a region, the importance-degree-request receiving unit 107 to determine the degree of importance for a region in accordance with a request made by a user through the window 120, shown in Fig. 12 to input the degree of importance. Thus, processing is conducted at each of the steps to identify the degree of importance for regions or categories.

The processing continues to step 156 to determine colors for regions. To determine colors for regions, colors are arranged in accordance with the areas of the regions, which areas are determined using criteria determined by picture-element counts, as previously described. The area of a region is determined to be small, medium or large depending upon the number of picture elements in the region. The coloring of a region is then determined in accordance with the result of the judgment in accordance with the color-arrangement rules. The degree of importance is also used for determining the coloring of a region in accordance with the color-arrangement rules.

The processing proceeds to step 157 to apply the coloring of regions determined at the previous step to the actual text. Then, at step 158 to display the text, is displayed on the region coloring. Subsequently, the processing at step 159 displays an inquiry to the user, asking the user whether the results of coloring the regions are satisfactory. A response to the inquiry received from the user is then evaluated. If the response received from the user confirms that the results of the region coloring are satisfactory, the processings are complete. If the user is not satisfied with the processing results, the processing returns to step 150 to repeat the processings from step 150.

The region colors determined by the processing conducted so far are applied to the text picture by controlling the output-picture generating unit 4. The resulting text-picture data is temporarily stored in the output-picture memory unit 15 in the print-out unit 5 to be later output by the print-out unit 5. The resulting text-picture data that is temporarily stored in the output-picture memory unit 15 is displayed on the screen of a display unit to be previewed by the user. If a user is not satisfied with the results, the processings are conducted again.

A basic difference between the graphic processing apparatus of the first embodiment and the graphic processing apparatus of the third embodiment is that, in the third embodiment, a category formed by collecting regions to be colored with the same color and degree of importance can be specified. In the specification of regions, the window 30 for specifying regions is used to specify and select, for example, two regions D and E to be colored with a color as shown in Fig. 3. The window 40 for specifying colors is used to specify and select, for example, the color palette of the green color as shown in Fig. 4. The operations to collect the regions D and E in a first category and to assign the green color to this category are then complete. The window 120 for inputting the degree of importance is most used to set the degree of importance for a region or a category, as shown in Fig. 12. These operations are repeatedly conducted to set a hue and degree of importance for each region or category.

After a hue and degree of importance for each region or category have been set, a color is determined for each region or category in accordance with the hue and degree of importance, by the color-arrangement rules, shown in Figs. 13 and 14. The color-arrangement rules prescribe a relation between the degree of importance and density that, the higher the degree of importance the higher the density of the color. Accordingly, a region with a high degree of importance is colored with a color having such a density so the region becomes striking.

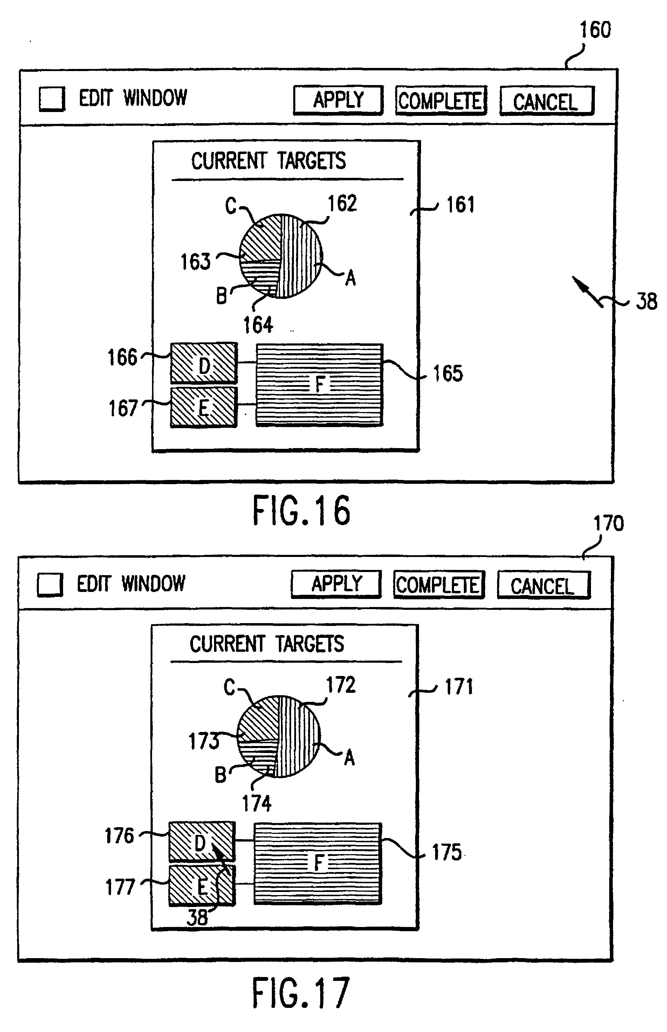

Fig. 16 is a diagram for explaining coloring of regions of a text picture wherein a density of a color assigned to each region in the text is determined in accordance with the degree of importance. As discussed earlier, when the degrees of importance for regions A and B are set at a high level through the window 120 to input the degree of importance, shown in Fig. 12, regions A and B are each colored with a dark color as in Fig. 16, to result in a text picture with regions A and B highlighted.

As a result of setting the degrees of importance for regions A and B at a high level, dark-red and dark-blue colors are determined for regions A and B, respectively, in accordance with coloring conforming to the color-arrangement rules. In addition, a light-green color is determined for regions C, D and E, whereas a light-blue color is determined for region F. This coloring is displayed on an edit window 160 for previewing a text picture 161, as shown in Fig. 16. As shown, regions 162 and 163 of the text picture 161 are colored with dark-red and light-green colors, respectively. Additionally, region 164 is colored with a dark-blue color, whereas region 165 is colored with a light-blue color. Regions 166 and 167 are both colored with a light-green color. In this way, regions in a text picture are each colored with a color with a density that, the higher the degree of importance set for a region the darker the color applied to the region, or conversely, the lower the degree of importance set for a region the lighter the color applied to the region.

A modified version of the third embodiment is now explained. In general, the system components comprising the third embodiment are identical with those of the first embodiment. For example, the color/category-request receiving unit 106 can be devised so with a colored manuscript, the color of the manuscript is read and used as a specified color. In a closed region having a plurality of colors, a color colored on a largest number of picture elements is treated as a specified color, or alternatively, an interactive sub-window is displayed to a user and receives a select command from the user to indicate a specified color.

Regarding the specification of a category, after some regions to be grouped into a category have been specified in accordance with a command entered by the user, a category number is specified for the regions through the window 110 to input region categories shown in Fig. 11. Then, a color to be applied to the regions of the category is specified through the window 40 to specify region colors, shown in Fig. 4. As an alternative, a color to be applied to the regions of the category can be specified through the window 40 to specify region colors by skipping the operation to specify a category number for the regions through the window 110. A category number is then automatically assigned to the category in order and displayed on the window 110. Then, the operation to specify some regions to be grouped into a category can be repeated.

The color-arrangement rules stored in the color-arrangement-rule holding unit 104 can also be modified in a variety of ways. The basic regulation with respect to the degree of importance in the color-arrangement rules can also state that the higher the degree of importance the higher the chroma. The color-arrangement rules that take a degree of importance as a parameter can be set so a vivid color, such as red, pink or orange, is assigned to a region with a high degree of importance. A non-vivid color, such as blue or green, is assigned to a region with a low degree of importance when a user does not specifically specify a hue in the category specification.

If colors are arranged in accordance with the color-arrangement rules stored in the color-arrangement-rule holding unit 104 that take the degree of importance and region area as parameters, a higher quality of text picture can be resulted. This is because variations in highlighting among regions caused by differences in area are eliminated, and a region with a high degree of importance can be highlighted. For example, in Fig. 17 used to explain an example of density determination based on the region area and the degree of importance. In an edit window 170, a high degree of importance is specified for regions A and B. Regardless, the areas of regions, operations conducted by the region-area determining unit 13 put regions in area ranges as follows: region A in the medium range, region B in the small range, region C in the medium range, region D in the medium range, region E in the medium range and region F in the large range. With the specification of a degree of importance and determination of ranges for region areas described above, regions are each colored with a color as shown in the figure. Having an area larger than region B, region A is colored with a color lighter than the color for region B. In addition, since area F has a large area, painting region F with a color of the same density will make it striking. For this reason, region F is colored with a lightest color.

As a result, in the window 170 in Fig. 17 for previewing a text picture 171, regions 172 and 173 of the text picture 171 are colored with slightly-dark-red and medium-green colors respectively. In addition, region 174 is colored with a dark-blue color, whereas region 175 is colored with a light-blue color. Regions 176 and 177 are both colored with a medium-green color.

If a color is expressed by combining the differences in chroma and hue, in addition to density, the highlighting of a region can be controlled more finely as in the first embodiment. In this case, the color-arrangement rules can be summarized into a table such as the one shown in Fig. 14. As shown in the figure, the table is used to determine density and chroma of a color for a region, in accordance with a combination of the area and degree of importance of the region.

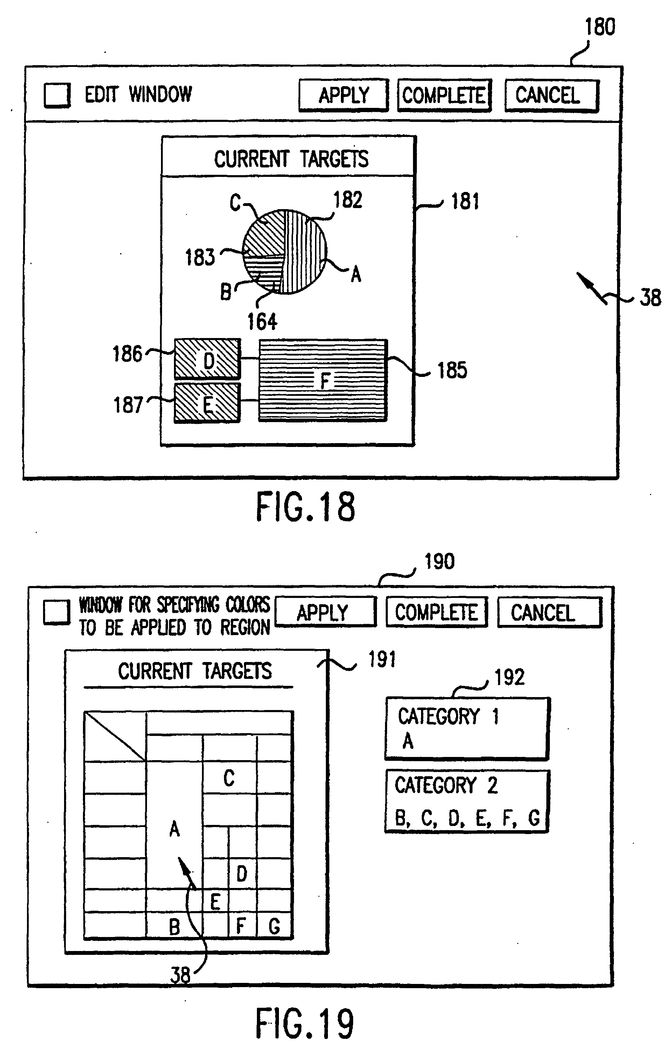

An example of coloring regions in accordance with such color-arrangement rules is shown in Fig. 18, where the density and chroma of a color for a region are determined in accordance with a combination of the area and degree of importance of the region.

Much like the example of coloring shown in Fig. 17, at the window 180 in Fig. 18 for previewing a text picture 181, a high degree of importance is specified in advance for regions A and B. As for the areas of regions, regions are put in area ranges as follows: region A in the medium range, region B in the small range, region C in the medium range, region D in the medium range, region E in the medium range and region F in the large range. As a result, regions 182 and 183 of the text picture 181 are colored with a color having a medium density and a high chroma and a color having a medium density and a medium chroma, respectively. In addition, region 184 is colored with a color having a high density and chroma whereas region 185 is colored with a color having a low density and medium chroma. Regions 186 and 187 are both colored with a color having a medium density and a medium chroma.

In this way, differences in density result as if differences in areas were eliminated. In addition, areas A and B, which both have a high degree of importance, are each highlighted with a color each having a high chroma. A region can also be highlighted using a difference in hue, instead of chroma. A region with a high degree of importance is colored with a vivid color, while a region with a low degree of importance is colored with a non-vivid color to provide the same effect. If the color-arrangement rules are set so a color difference can be expressed using an aggregate combination of the density, chroma and hue, the highlighting of a region can be controlled even more finely.

Operations to carry out coloring by categorizing regions to be colored with a color are now explained. As shown in Fig. 19, a manuscript picture 191 including regions A through G is read to the text-picture memory unit and displayed on a window 190 to specify regions to be colored with a color. In addition, a sub-window 192 for specifying categories is opened. Through the sub-window 192, commands to categorize the regions are entered by operating the pointing device 38 so that region A is included in category 1, whereas regions B to G are grouped in category 2. Regions grouped in the same category are colored with a same color, in accordance with the basic regulation of the control-arrangement rules. However, another regulation in control-arrangement rules state that a region with a large area should be colored with a light color, while a region with a small area should be colored with a dark color. If a category includes regions with small and large areas, the color arrangement will change depending upon whether the regions in the category is colored with a dark or light color.

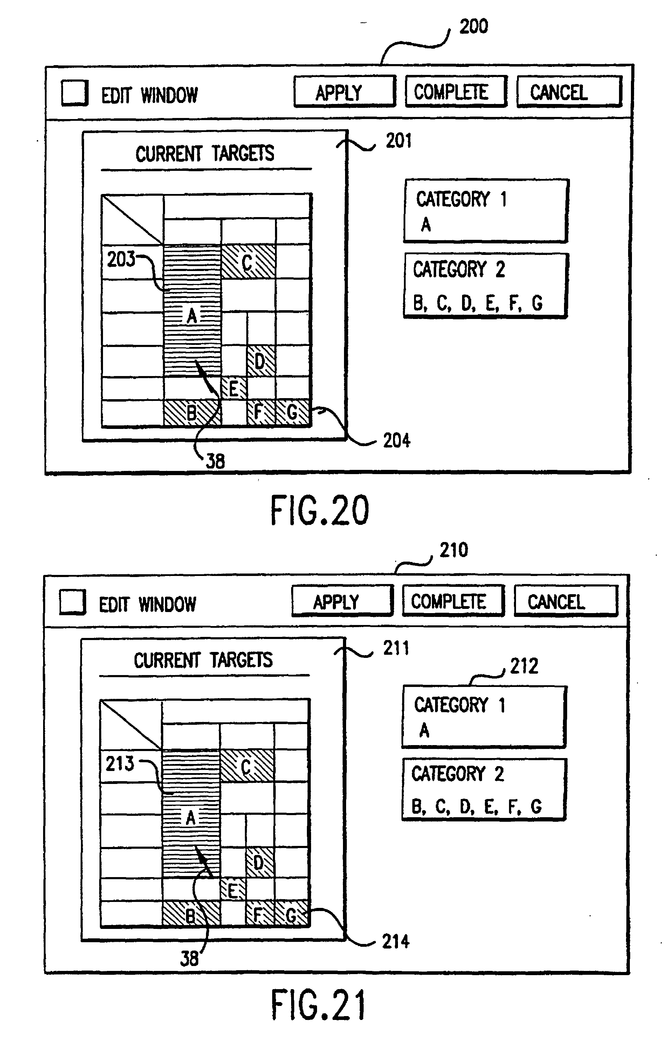

If a category includes a number of regions colored with the same color, the category will be striking. A regulation requiring that a category having a large total of region areas be colored with a light color, therefore needs to be added to control-arrangement rules. With this additional regulation, a category including a plurality of regions can be colored with an appropriate color. An example of coloring categorized regions in accordance with color-arrangement rules is shown in Fig. 20.

Fig. 20 is a diagram used to explain an example of density determination according to the total number of region areas pertaining to a category. The control-arrangement rules are used to determine a color density for a category in accordance with the total of region areas of the category. In the example, the total of region areas of category 1 comprising region A is smaller than the total of region areas of category 2 comprising regions B, C, D, E, F and G. Accordingly, region 203 in category 1 is colored with a light color whereas regions 204 in category 2 are colored with an even lighter color. In edit window 200 for previewing a manuscript picture, region 203 in category 1 of an edited picture 201 is colored with a light-blue color, whereas regions 204 in category 2 are colored with a very light-green color.

According to another modification of the control-arrangement rules, a region having the largest area in a category is most influential so the color of the entire category is determined in accordance with the area of the region. Fig. 21 is a diagram used for explaining an example of determination of densities according to the largest region area among regions pertaining to a category. The control-arrangement rules are used to determine a color density for a category in accordance with the largest region area in the category. In the example, the largest region area of category 1 comprising region A is greater than the largest region area of category 2 comprising regions B, C, D, E, F and G. Accordingly, region 213 in category 1 is colored with a light color, whereas regions 214 in category 2 are colored with a medium color. In an edit window 210 for previewing a manuscript picture, region 213 in category 1 of an edited picture 211 is colored with a light-blue color, whereas regions 204 in category 2 are colored with a medium green color.

Where text comprises a plurality of pages, a category may include regions on more than one page. In this case, the contents of all the pages are read in to the text memory unit and, by treating them as a batch, the text can be processed as if the text were all written on a single page.

Similar to the second embodiment, the third embodiment implements the graphic processing apparatus provided by the invention in a copy machine. On the other hand, a graphic processing apparatus of the invention in a workstation is explained as a fourth embodiment. The fourth embodiment implements the example of a copy machine implemented by the third embodiment in a workstation (W/S).

The graphic processing apparatus of the fourth embodiment is the same as the configuration of the third embodiment shown in Fig. 3. In addition, the system components, other than the color/category-request receiving unit 106 and the importance-degree-request receiving unit 107, shown in Fig. 10 each have the same configuration as those of the second embodiment. Thus, it is not necessary to repeat the description of those system components in the explanation of the fourth embodiment. The explanation covers only differences between the system components.

The color/category-request receiving unit of the fourth embodiment, facilitates specification of a color for each region by opening a sub-window of the region-color specification window 40, shown in Fig. 4, where one of edit windows is a text editor. Alternatively, the specification of a color for each region is implemented by opening a color-name menu or color palettes from a menu bar of an edit window, and moving a pointer cursor to point to a desired color. In addition, in the case of a colored manuscript picture, color attributes of a specified region are read, and values can be used as a specified color. Moreover, instead of specifying a color directly for each region, a color table set separately can be used for specifying a color. Additionally, if it is desired to color a plurality of regions with the same color, the regions can be handled as a category. In this case, after several regions have been specified, a window 110 for inputting region categories like the one shown in Fig. 11 is used for specifying a category number or the like. As an alternative, after several regions have been specified, a window 40 for specifying a region color, shown in Fig. 4, can also be used for directly specifying a region color for each region and, of course, a category can be specified at the same time. The operations are the same as those conducted in the described embodiments. In the fourth embodiment, data is code information.

Much like the third embodiment, the importance-degree-request receiving unit of the fourth embodiment, is a processing module, which allows a user to determine the degree of importance for each region or each category. The degree of importance for a region or a category is specified by a user, either in a separate operation to enter the degree of importance or at simultaneously with the operation to enter a region to be colored with a color. In either case, a user, either enters a number representing the degree of importance for a region or a category or operates a language menu button, such as "High," "Medium" or "Low" representing the degree of importance or a slider through the window 120, for inputting the degree of importance shown in Fig. 12.

Instead of manually entering a degree of importance, a user can determine the degree of importance for a region or a category based on information on the degree of importance stored in a data base. For example, the data base includes a list of people to whom text is to be distributed. In this case, a region in the text that matches the distribution list is determined as a region having a high degree of importance. These kinds of processing are implemented using a processing module, which can be customized by the user.

The operation procedure of the graphic processing apparatus implemented by the fourth embodiment having a configuration described above is the same as the processing flow of the third embodiment, shown in Fig. 15. In addition, the operation of the manuscript-picture holding unit is the same as the second embodiment, while the operations of the other system components are the same as those of the third embodiment.

With the first through fourth embodiments, regions of a text picture are colored to result in a high-quality text picture. Instead of the coloring parameters, hatching designs and hatching patterns and densities can be specified. The configuration of a graphic processing apparatus for producing high-quality text pictures through hatching is now explained according to a fifth embodiment.

In a graphic processing apparatus of the fifth embodiment, a user can specify a region in a text picture to be hatched, a hatching design/pattern for each region, regions to be hatched with the same hatching design/pattern, a category grouping a plurality of regions to be hatched with the same hatching design/pattern and the degree of importance for each region or each category, requesting the system to generate a high-quality picture with hatching designs/patterns and hatching densities determined in accordance with information on the area and the degree of importance for each region or each category to be hatched.

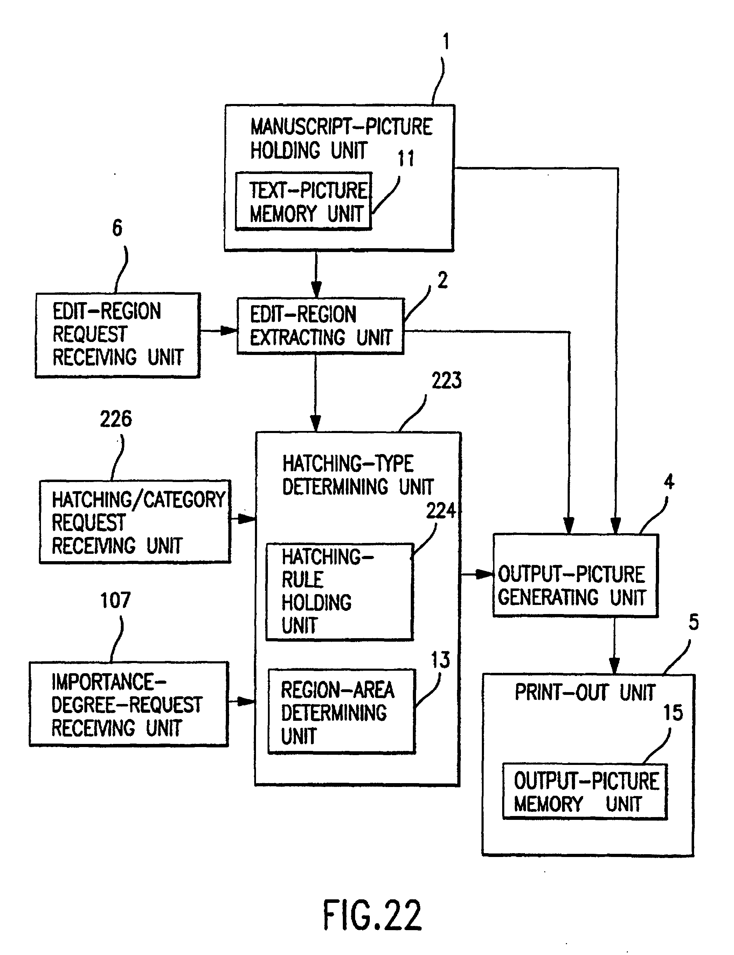

Fig. 22 is a diagram showing an overall system configuration of a graphic processing apparatus as implemented by the fifth embodiment of the invention. The apparatus comprises a manuscript-picture holding unit 1 an edit-region extracting unit 2, an output-picture generating unit 4, a print-out unit 5, an edit-region-request receiving unit 6, a text-picture memory unit 11, a region-area determining unit 13, an output-picture memory unit 15, an importance-degree-request receiving unit 107 and a hatching-type determining unit 223, a hatching-regulation holding unit 224, and a hatching/category-request receiving unit 226.

System components in the fifth embodiment in Fig. 22 are identical with those employed in the graphic processing apparatus of the third embodiment an are denoted by the same reference numerals as those used in the first embodiment.

System components in the fifth embodiment in Fig. 22 that are identical in the third embodiment are the manuscript-picture holding unit 1, the edit-region extracting unit 2, the output-picture generating unit 4, the print-out unit 5, the edit-region-request receiving unit 6, the text-picture memory unit 11, the region-area determining unit 13, the output-picture memory unit 15 and the importance-degree-request receiving unit 107.

In the graphic processing apparatus of the fifth embodiment, the hatching/category-request receiving unit 226 serves as a substitute for the color/category-request receiving unit 106 of the third embodiment in Fig. 10. Thus, the hatching-regulation holding unit 224 serves as a substitute for the color-arrangement-rule holding unit 104. In the hatching-regulation holding unit 224, hatching-arrangement rules which prescribe hatching in accordance with parameters including the hatching design/pattern, category and degree of importance, are stored. The hatching-type determining unit 223 determines the hatching or dot density of hatching to be applied to each region, in accordance with, among other parameters, an area of the region, category and degree of importance by abiding by the hatching-arrangement rules.

In place of coloring conducted by the graphic processing apparatus of the third embodiment, the graphic processing apparatus of the fifth embodiment performs hatching. The difference between coloring and hatching is that, in the case of the former, three parameters, i.e., color density, chroma and color-phase difference, are varied. In the case of the latter, only the density is varied. For example, instead of painting a region with a color having a high density, a region is hatched at a high dot density, or with small segment gaps in each slanting hatching line. A hatching design/pattern is determined by the thickness of the slanting hatching lines and number of hatching overlaps, in addition to the hatching density.

Next, the system components of the fifth embodiment are explained. The color/category-request receiving unit 106 receives a request made by a user indicating a hatching design/pattern to be used in the hatching of a region, group or category of regions to be hatched with similar hatching design/pattern. With a text picture including a plurality of regions to be hatched with the same hatching design and pattern, these regions are handled as a category. Therefore, a category representing these regions is specified.

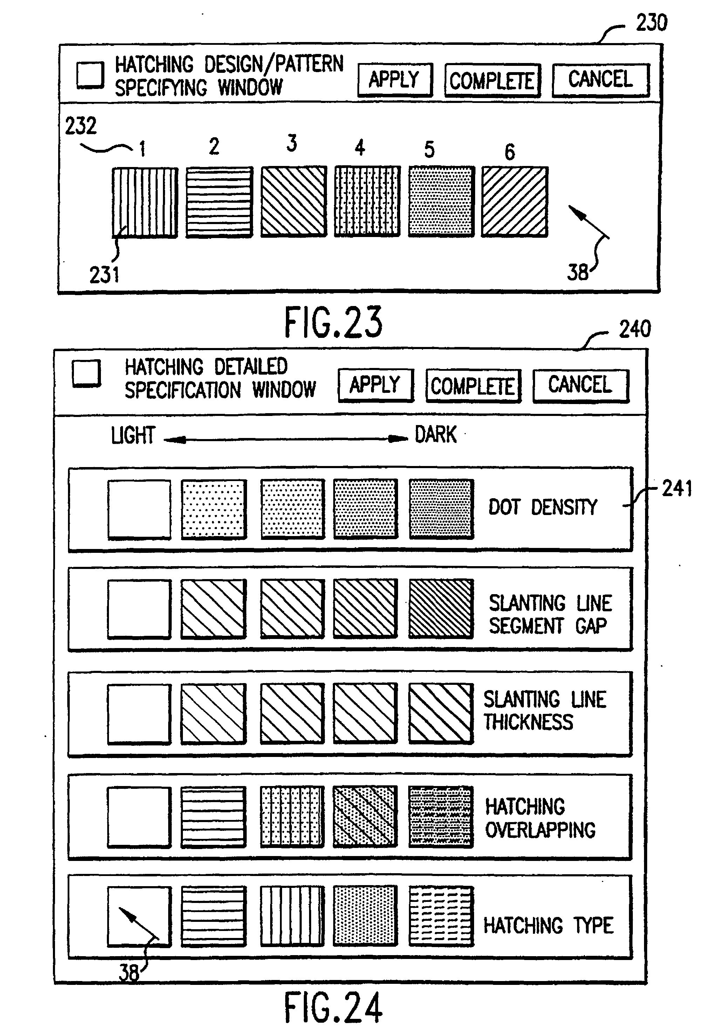

Fig. 23 is a diagram showing a window 230 for specifying a hatching design/pattern through the hatching/category-request receiving unit 226. Operations for specifying a hatching design/pattern and a category are now explained. Regions to be edited are specified to the edit-region-request receiving unit 6 through a region specifying window, like the window 30 shown in Fig. 3 to specify regions to be colored. As shown in Fig. 23, a hatching design/pattern 231 and a category number 232 on the hatching specifying window 230 are specified for the regions by operating the pointing device 38. After some regions have been specified, a hatching design/pattern and a category number are assigned to the specified regions by the hatching specifying window 230. Thus, the same category number is assigned to a plurality of specified regions and, simultaneously a hatching design/pattern is specified for a category denoted by the number.

A hatching design/pattern is specified for a category representing a plurality of regions by a hatching detailed specification window 240, shown in Fig. 24. Hatching details specified for regions are hatching attributes 241, which include a dot density, slanting-line segment gap, slanting-line thickness, number of hatching overlaps and hatching type. In addition, a hatching type can be specified for a category by specifying a hatching name.

The hatching rules stored in the hatching-regulation holding unit 224 of the fifth embodiment prescribe a hatching density with a degree of importance, hatching type and region area taken as parameters. The hatching rules of the fifth embodiment are used to determine the density of hatching dots in accordance with a combination of the region area and degree of importance.

As shown in the hatching detailed specification window 240 of Fig. 24, range of dot densities, a range of slanting-line segment gaps, range of slanting-line thickness values, range of hatching-overlap counts and variety of hatching types are provided. Hatching detailed designs and patterns are determined in accordance with hatching rules, which state: "A region having a large area is hatched at a low density; a region having a small area is hatched at a high density; a region having a low degree of importance is hatched at a low density; and a region having a high degree of importance is hatched at a high density."

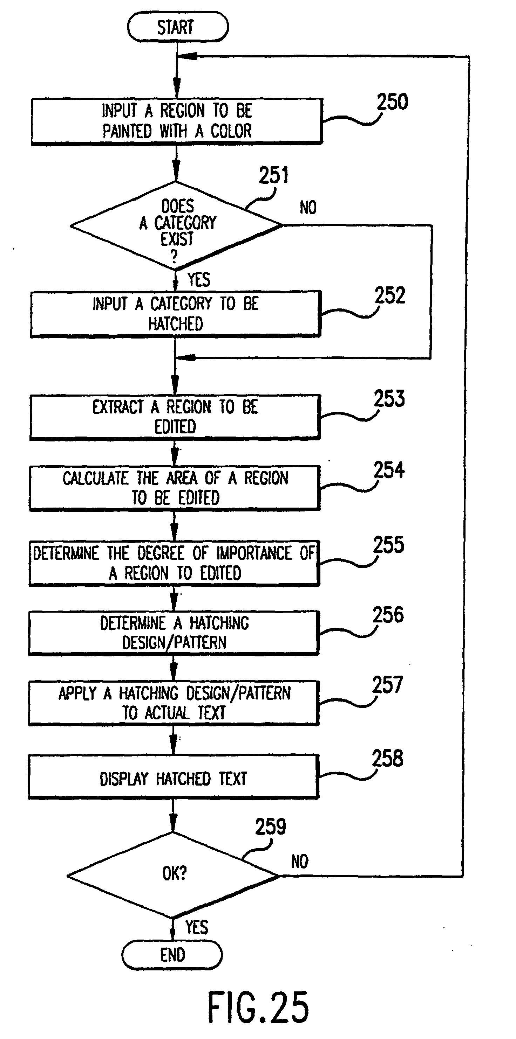

Fig. 25 is a flowchart showing a hatching process conducted by a control -unit of the graphic processing apparatus of the fifth embodiment in accordance with the invention. The processing flow of the hatching process conducted by the fifth embodiment is basically the same as the third embodiment. The difference is that instead of painting a region with a color as in the third embodiment, the fifth embodiment hatches an edit region.

As shown in the figure 25, processing begins at step 250 to input locations representing regions to be edited is conducted. At this step, a scanner is controlled to read in a text picture, and temporarily store it into the text-picture memory unit 11 of the manuscript-picture holding unit 1. Then, the edit-region-request receiving unit 6 is controlled to display the picture data stored in the text-picture memory unit 11 on a window 30 for specifying regions to be edited. Command specifying regions to be hatched in the picture are received. Subsequently, a window 240 for specifying detailed hatching designs and patterns shown in Fig. 24 is displayed.

The processing continues to step 251 to determine whether a category exists. If a category exists, the processing flow proceeds to step 252 to input hatching designs and patterns for the category. A hatching design and a hatching pattern can be specified through, typically, the hatching specifying window 230 shown in Fig. 23. The processing then continues to step 253.

If no category exists, the processing continues from step 251 directly to step 253. At step *253,* processing to extract a region to be edited is conducted. When a command indicating a region to be edited is received, the edit-region extracting unit 2 is controlled to perform the processing to extract a region to be edited, as previously described.

The processing then proceeds to step 254 to compute the area of a region to be edited, which processing is the same as in Fig. 6. In the processing to calculate the area of a region to be edited, the number of picture elements included in a closed region extracted in a process to extract the region to be edited is counted as follows. The number of picture elements in a scan line (Li) is counted in the main scanning either horizontal or short-side direction. The counting is repeated for all the scan lines Li, where i = 1 to n, in the auxiliary scanning either vertical or long-side direction in the closed region to find the total number of picture elements, which represents the area of the closed region.

The processing then continues to step 255 to identify the degree of importance for a region to be edited. In the processing to determine the degree of importance for a region, the importance-degree-request receiving unit 107 is controlled to determine the degree of importance for a region in accordance with a request made by a user made through the window 120 in Fig. 12 to input a degree of importance. Thus, processing is conducted at each of the steps to identify the degree of importance for regions or categories.

The processing then continues to step 256 to determine hatching designs and hatching patterns for regions. In the processing to determine hatching designs and hatching patterns for regions, hatching densities are arranged in accordance with the areas of the regions, which are determined by using criteria determined by picture-element counts, as described earlier. The area of a region is determined to be small, medium or large depending upon the number of picture elements included in the region. The hatching density of a region is then determined in accordance with the result of the determination by abiding by the color-arrangement rules. The degree of importance is used to determine the coloring of a region in accordance with color-arrangement rules.

The processing then proceeds to step 257 to apply the hatching of regions determined to the actual text. Then, the processing continues to step 258 to display the text to which the region hatching was applied. Subsequently, the processing proceeds to step 259 to display an inquiry to the-user, asking the user whether or not the results of hatching the regions are satisfactory. A response to the inquiry received from the user is then evaluated. If the response received from the user confirms that the results of the region hatching are satisfactory, the processing is complete. If the user is not satisfied with the processing results, the processing flow returns to step 250 to repeat the processing from step 250.

Thus, the region hatching designs and hatching patterns determined are applied to the text picture by controlling the output-picture generating unit 4, a resulting text-picture data is stored temporarily in the output-picture memory unit 15 employed in the print-out unit 5 to be later output by the print-out unit 5. The resulting text-picture data stored in the output-picture memory unit 15 is displayed on the screen of a display unit to be previewed by a user. If a user is not satisfied with the results, the processing is conducted again.

## Claims

1. A graphic processing apparatus that changes appearances of selected regions of an image comprising:
a memory (1) that temporarily stores the image;
a region selector (2) that allows a plurality of regions of the image to be selected;
an appearance alterer (3) that alters an appearance of each of the plurality of selected regions; and
an outputter (4) that outputs the image, the selected regions of the output image having the altered appearances
**characterized in that**
said plurality of regions of the image selected by said region selector (2) are differentiated by at least one of color and hatching, and
said appearance alterer (3) alters an appearance of each of the plurality of selected regions at the same time, the altered appearances of the plurality of selected regions being different from one another and being automatically determined.

2. The apparatus of claim 1, wherein the hatching is at least one of hatching designs and hatching patterns and the hatching designs and hatching patterns are differentiated by hatching density.

3. The apparatus of claim 2, wherein the difference in hatching density is at least a difference in dot density, a difference in hatching segment gap, a difference in hatching-line thickness and a difference in hatching-overlap count.

4. The apparatus of claim 1, further comprising a region appearance selector (3) that selects the appearance for each of the plurality of selected regions based on at least one of an area and an importance of that selected region, wherein each of the plurality of selected regions is one of at least one category, a characteristic of each category based on the at least one of the areas and the importance of the at least one selected region included in that category; and
the at least one category is differentiated from one another by differences in the characteristics of each of the at least one category.

5. The apparatus of claim 4, wherein for each of the at least one category, the characteristic of that category is determined in accordance with a sum of the areas of the at least one selected region included in that category or a largest area of the at least one selected region included in that category.

6. The apparatus of claim 1, further comprising an importance degree determiner (7, 106, 107) that determines degrees of indicated importance for each of the plurality of selected regions, wherein for each of the plurality of selected regions of the output image, the appearance of that selected region is based on the degree of indicated importance of that selected region.

7. The apparatus of claim 1, wherein the appearance alterer (3) is a region-color alterer that differentiates appearance attributes from each other among each of the plurality of selected regions based on at least one appearance-arrangement rule (120, 140).

8. The apparatus of claim 7, wherein:
the at least one appearance attribute is a color attribute; and differences in the color attribute used to differentiate the plurality of selected regions from one another is at least one of differences in density, differences in chrome and differences in hue.

9. The apparatus of claim 8, wherein the at least one appearance-arrangement rule (120, 140) comprises altering any of the plurality of selected regions having an area larger than a reference area in appearance with a region color having a low density, and altering any of the plurality of selected regions having an area smaller than the reference area in appearance with a region color having a high density.

10. The apparatus of claim 9, wherein the at least one appearance arrangement rule (120, 140) comprises altering any of the plurality of selected regions having an area larger than a reference area in appearance with an region color having the low chroma, and altering any of the plurality of selected regions having an area smaller than the reference area in appearance with a region color having a high chroma.

11. The apparatus of claim 9, wherein the at least one appearance arrangement rule (120, 140) comprises altering any of the plurality of selected regions having an area larger than a reference area in appearance with a non-vivid region color having a low density, and altering any of the plurality of selected regions having an area smaller than the reference area in appearance with a vivid region color having a high density.

12. The apparatus of claim 10, wherein the at least one appearance-arrangement rule (120, 140) comprises:
altering each of the plurality of selected regions having an area larger than a reference area in appearance with a non-vivid region color, and altering each of the plurality of selected regions having an area smaller than the reference area in appearance with a vivid region color; and
gradually decreasing the density and the chroma of a color to be applied to any of the plurality of selected regions as the area of the selected regions increases.

13. A method for graphically altering appearance of a plurality of regions of an image, comprising:
(a) storing the image in memory (1);
(b) selecting a plurality of regions of the stored image;
(c) altering the plurality of selected regions; and
(d) outputting an output image, wherein each selected region of the output image has the altered appearance,
**characterized in that** step (c) comprises
altering the plurality of selected regions at the same time such that each selected region has an appearance different than the other selected regions, the different appearances being automatically determined.

## Patentansprüche

1. Vorrichtung zur Graphikverarbeitung, die das Aussehen ausgewählter Bereiche einer Abbildung ändert, mit:
einem Speicher (1), der die Abbildung zeitweilig speichert;
einem Bereichswähler (2), der die Auswahl einer Vielzahl von Bereichen der Abbildung erlaubt;
einem Aussehensänderer (3), der das Aussehen jedes der Vielzahl ausgewählter Bereiche ändert; und
einem Ausgeber (4), der die Abbildung ausgibt, wobei die ausgewählten Bereiche der ausgegebenen Abbildung das geänderte Aussehen haben,
**dadurch gekennzeichnet, daß**
die mittels des Bereichswählers (2) ausgewählte Vielzahl von Bereichen der Abbildung sich durch die Farbe und/oder die Schraffur unterscheiden, und
der Aussehensänderer (3) das Aussehen jeder der Vielzahl ausgewählter Bereiche gleichzeitig ändert, wobei sich das geänderte Aussehen jedes ausgewählten Bereichs von dem der anderen ausgewählten Bereiche unterscheidet und das unterschiedliche Aussehen automatisch bestimmt ist.

2. Vorrichtung nach Anspruch 1, bei der die Schraffur aus Schraffurdesigns und/oder Schraffurmustern besteht und die Schraffurdesigns und Schraffurmuster sich durch die Schraffurdichte unterscheiden.

3. Vorrichtung nach Anspruch 2, bei der der Unterschied in der Schraffurdichte mindestens ein Unterschied in der Punktdichte, ein Unterschied in der Schraffursegmentlücke, ein Unterschied in der Schraffurstrichdicke und ein Unterschied in der Schraffurüberlappungszählung ist.

4. Vorrichtung nach Anspruch 1, die ferner einen Bereichsaussehenswähler (3) aufweist, der das Aussehen für jeden der Vielzahl ausgewählter Bereiche auf der Basis wenigstens eines, der Flächen und/oder der Wichtigkeit, des ausgewählten Bereichs auswählt, wobei jeder der Vielzahl ausgewählter Bereiche einer von mindestens einer Kategorie ist, wobei eine Charakteristik jeder Kategorie auf dem wenigstens einen, den Flächen und der Wichtigkeit des mindestens einen ausgewählten, in der Kategorie eingeschlossenen Bereichs beruht; und die mindestens eine Kategorie voneinander durch Unterschiede in den Charakteristiken jeder der mindestens einen Kategorie unterschieden ist.

5. Vorrichtung nach Anspruch 4, bei der für jede der mindestens einen Kategorie die Charakteristik dieser Kategorie entsprechend einer Summe der Flächen des mindestens einen ausgewählten, in der Kategorie eingeschlossenen Bereichs oder einer größten Fläche des mindestens einen ausgewählten, in der Kategorie eingeschlossenen Bereichs bestimmt ist.

6. Vorrichtung nach Anspruch 1, die ferner einen Wichtigkeitsgradbestimmer (7, 106, 107) aufweist, der für jeden der Vielzahl ausgewählter Bereiche Grade angezeigter Wichtigkeit bestimmt, wobei für jeden der Vielzahl ausgewählter Bereiche der ausgegebenen Abbildung das Aussehen des ausgewählten Bereichs auf dem Grad angezeigter Wichtigkeit dieses ausgewählten Bereichs beruht.

7. Vorrichtung nach Anspruch 1, bei der der Aussehensänderer (3) ein Bereichsfarbenänderer ist, der Aussehensattribute voneinander unter jedem der Vielzahl ausgewählter Bereiche auf der Basis mindestens einer Aussehensanordnungsregel (120, 140) unterscheidet.

8. Vorrichtung nach Anspruch 7, bei der das mindestens eine Aussehensattribut ein Farbattribut ist; und zum Unterscheiden der Vielzahl ausgewählter Bereiche voneinander benutzte Unterschiede im Farbattribut Unterschiede in der Dichte und/oder Unterschiede in der Sättigung und/oder Unterschiede im Farbton sind.

9. Vorrichtung nach Anspruch 8, bei der die mindestens eine Aussehensanordnungsregel (120, 140) aufweist, jeglichen der Vielzahl ausgewählter Bereiche, der eine Fläche größer als eine Bezugsfläche hat, im Aussehen mit einer Bereichsfarbe zu ändern, die eine niedrige Dichte hat, und jeglichen der Vielzahl ausgewählter Bereiche, der eine Fläche kleiner als die Bezugsfläche hat, im Aussehen mit einer Bereichsfarbe zu ändern, die eine hohe Dichte hat.

10. Vorrichtung nach Anspruch 9, bei der die mindestens eine Aussehensanordnungsregel (120, 140) aufweist, jeglichen der Vielzahl ausgewählter Bereiche, der eine Fläche größer als eine Bezugsfläche hat, im Aussehen mit einer Bereichsfarbe zu ändern, die eine niedrige Sättigung hat, und jeglichen der Vielzahl ausgewählter Bereiche, der eine Fläche kleiner als die Bezugsfläche hat, im Aussehen mit einer Bereichsfarbe zu ändern, die eine hohe Sättigung hat.

11. Vorrichtung nach Anspruch 9, bei der die mindestens eine Aussehensanordnungsregel (120, 140) aufweist, jeglichen der ausgewählten Bereiche, der eine Fläche größer als eine Bezugsfläche hat, im Aussehen mit einer nichtleuchtenden Bereichsfarbe zu ändern, die eine niedrige Dichte hat, und jeglichen der Vielzahl ausgewählter Bereiche, der eine Fläche kleiner als die Bezugsfläche haben, im Aussehen mit einer leuchtenden Bereichsfarbe zu ändern, die eine hohe Dichte hat.

12. Vorrichtung nach Anspruch 10, bei der die mindestens eine Aussehensanordnungsregel (120, 140) aufweist, jeden der Vielzahl ausgewählter Bereiche, der eine Fläche größer als eine Bezugsfläche hat, im Aussehen mit einer nichtleuchtenden Bereichsfarbe zu ändern und jeden der Vielzahl ausgewählter Bereiche, der eine Fläche kleiner als eine Bezugsfläche hat, im Aussehen mit einer leuchtenden Bereichsfarbe zu ändern; und
die Dichte und Sättigung einer auf irgendeinen der Vielzahl ausgewählter Bereiche aufzubringenden Farbe mit zunehmender Fläche der ausgewählten Bereiche allmählich abzusenken.

13. Verfahren zum graphischen Ändern des Aussehens einer Vielzahl von Bereichen einer Abbildung, aufweisend:
(a) Speichern der Abbildung in einem Speicher (1);
(b) Auswählen einer Vielzahl von Bereichen der gespeicherten Abbildung;
(c) Ändern der Vielzahl ausgewählter Bereiche; und
(d) Ausgeben einer Ausgabeabbildung, bei der jeder ausgewählte Bereich der Ausgabeabbildung das geänderte Aussehen hat,
**dadurch gekennzeichnet, daß** Schritt (c) aufweist, die Vielzahl ausgewählter Bereiche gleichzeitig zu ändern, so daß jeder ausgewählte Bereich ein anderes Aussehen hat als die anderen ausgewählten Bereiche, wobei das unterschiedliche Aussehen automatisch bestimmt wird.

## Revendications

1. Appareil de traitement graphique qui change l'apparence de régions choisies dans une image comprenant :
une mémoire (1) qui mémorise temporairement l'image ;
un sélecteur (2) de région qui permet de sélectionner une pluralité de régions de l'image ;
un dispositif de modification d'apparence (3) qui modifie l'apparence de chacune des régions de la pluralité de régions choisies ; et
un dispositif de présentation (4) qui présente l'image, les régions choisies de l'image présentée ayant les apparences modifiées,
**caractérisé en ce que**
ladite pluralité de régions de l'image choisies par ledit sélecteur (2) de région sont différenciées par au moins un élément parmi la couleur et les hachures, et
ledit dispositif de modification d'apparence (3) modifie une apparence de chacune des régions de la pluralité de régions choisies en même temps, les apparences modifiées de la pluralité de régions choisies étant différentes les unes des autres et étant modifiées automatiquement.

2. Appareil selon la revendication 1, dans lequel les hachures sont au moins d'un type parmi des dessins de hachures et des motifs de hachures et les dessins de hachures et les motifs de hachures sont différenciés par la densité de hachurage.

3. Appareil selon la revendication 2, dans lequel la différence de densité de hachurage est au moins une différence de densité de points, une différence d'espace de segments de hachures, une différence d'épaisseur de ligne de hachure, et une différence de nombre de chevauchements de hachures.

4. Appareil selon la revendication 1, comprenant en outre un sélecteur d'apparence de région (3) qui choisit l'apparence pour chacune des régions de la pluralité de régions choisies en fonction d'au moins un paramètre parmi une superficie et une importance de cette région choisie, dans lequel chacune des régions de la pluralité de régions choisies est un élément parmi au moins une catégorie, une caractéristique de chaque catégorie basée sur la au moins une des superficies et l'importance de la au moins une région choisie comprise dans cette catégorie ; et
la au moins une catégorie sont différenciées les unes des autres par des différences dans les caractéristiques de chacune des au moins une catégorie.

5. Appareil selon la revendication 4, dans lequel pour chacune des au moins une catégorie, la caractéristique de cette catégorie est déterminée en fonction d'une somme des superficies de la au moins une région choisie comprise dans cette catégorie ou une superficie la plus grande de la au moins une région choisie comprise dans cette catégorie.

6. Appareil selon la revendication 1, comprenant en outre un dispositif de détermination de degré d'importance (7, 106, 107) qui détermine les degrés d'importance indiquée pour chacune des régions de la pluralité de régions choisies, dans lequel pour chacune des régions de la pluralité de régions choisies de l'image présentée, l'apparence de cette région choisie est basée sur le degré d'importance indiquée de cette région choisie.

7. Appareil selon la revendication 1, dans lequel le dispositif de modification d'apparence (3) est un dispositif de modification de couleur de région qui différencie les attributs d'apparence les uns des autres parmi toutes les régions de la pluralité de régions choisies selon au moins une règle d'agencement d'apparence (120, 140).

8. Appareil selon la revendication 7, dans lequel le au moins un attribut d'apparence est un attribut de couleur, et les différences d'attribut de couleur utilisées pour différencier la pluralité de régions choisies les unes des autres est au moins une différence parmi des différences de densité, des différences de chrominance et des différences de teinte.

9. Appareil selon la revendication 7, dans lequel la au moins une règle d'agencement d'apparence (120, 140) comprend le fait de modifier toute région de la pluralité de régions choisies ayant une superficie supérieure à une superficie de référence en apparence avec une couleur de région ayant une densité faible, et de modifier toute région de la pluralité de régions choisies ayant une superficie inférieure à la superficie de référence en apparence avec une couleur de région ayant une densité élevée.

10. Appareil selon la revendication 9, dans lequel la au moins une règle d'agencement d'apparence (120, 140) comprend le fait de modifier toute région de la pluralité de régions choisies ayant une superficie supérieure à une superficie de référence en apparence avec une couleur de région ayant une chrominance faible, et de modifier toute région de la pluralité de régions choisies ayant une superficie inférieure à la superficie de référence en apparence avec une couleur de région ayant une chrominance élevée.

11. Appareil selon la revendication 9, dans lequel la au moins une règle d'agencement d'apparence (120, 140) comprend le fait de modifier toute région de la pluralité de régions choisies ayant une superficie supérieure à une superficie de référence en apparence avec une couleur de région non vive ayant une densité faible, et de modifier toute région de la pluralité de régions choisies ayant une superficie inférieure à la superficie de référence en apparence avec une couleur de région vive ayant une densité élevée.

12. Appareil selon la revendication 10, dans lequel la au moins une règle d'agencement d'apparence (120, 140) comprend le fait de :
modifier toutes les régions de la pluralité de régions choisies ayant une superficie supérieure à une superficie de référence en apparence avec une couleur de région non vive, et de modifier toutes les régions de la pluralité de régions choisies ayant une superficie inférieure à la superficie de référence en apparence avec une couleur de région vive ; et
diminuer graduellement la densité et la chrominance d'une couleur à appliquer à l'une quelconque de la pluralité de régions choisies à mesure que la superficie des régions choisies augmente.

13. Procédé pour modifier graphiquement l'apparence d'une pluralité de régions d'une image, comprenant les opérations consistant à :
(a) mémoriser l'image dans une mémoire (1) ;
(b) sélectionner une pluralité de régions de l'image mémorisée ;
(c) modifier la pluralité de régions choisies ; et
(d) présenter une image, chaque région choisie de l'image présentée ayant l'apparence modifiée,
**caractérisée en ce que** l'étape (c) comprend le fait de modifier la pluralité de régions choisies en même temps de sorte que chaque région choisie a une apparence différente des autres régions choisies, les différentes apparences étant déterminées automatiquement.
